# EUROPEAN PATENT SPECIFICATION

(11) **EP 1 227 428 B1**
(45) Date of publication and mention of the grant of the patent: **04.02.2004**
(21) Application number: 02075987.4
(22) Date of filing: 17.09.1999
(51) Int. Cl.: G06K 7/00

(54) **Electrical connector for an electronic memory card or smart card**
Elektrischer Verbinder für eine elektronische Speicherkarte oder Chipkarte
Connecteur électrique pour une carte à mémoire électronique ou une carte à puce

(30) Priority: 22.09.1998 FR 9811789
(43) Date of publication of application: 31.07.2002
(62) Divisional of application: 99948772.1
(73) Proprietor: ITT MANUFACTURING ENTERPRISES, INC., Wilmington, Delaware 19801 (US)
(72) Inventor: Bricaud, Hervé, 39100 Dole (FR); Pizard, Yves, 39100 Dole (FR)
(74) Representative: Kohn, Philippe

(56) References cited:
- EP-A- 0 845 837
- FR-A- 2 737 321
- FR-A- 2 742 561

## Description

The present invention relates to an electrical connector for a contact-type smart card of rectangular general shape.

The invention relates more particularly to a connector of the type comprising a support made of insulating material which defines a housing open in its upper face, this housing being bounded laterally by two parallel longitudinal edges and transversely by at least one front bottom edge and accommodating a front portion of a card which is inserted into the housing in a longitudinal direction parallel to its plane and which, on its lower main face, includes conducting contact pads which are arranged near the front transverse edge of the card and which engage with the contact ends of electrical-contact elements arranged in the bottom of the housing of the support when the card is in its contact position in which its front transverse edge butts against the front transverse bottom edge of the housing, and of the type in which the electrical-contact elements are carried by the support.

Such an example of an electrical connector, sold by the company ITT, is described and illustrated in the French Patent Application FR-A-2,742,561.

That document provides a connector for connecting a standardized card of the MICROSIM type which is a small card. Thus, the greater longitudinal part forming the front portion of the card is accommodated in the housing of the connector support, that is to say the lower face of the card extends virtually over the entire area opposite the bottom of the housing formed in the insulating support, only a small rear longitudinal portion of the card projecting out of the housing, especially in order to be able to make it easier to grip it.

Moreover, the connection ends of the contact elements extend in groups longitudinally to the front and respectively to the rear of the insulating support, and beyond the front and rear transverse faces of the latter, in order to engage with conducting tracks of a printed-circuit board which accommodates the connector.

Finally, that document also proposes the arrangement of a metal cover which is mounted so as to slide on the support and which holds the card in the housing of the insulating support by virtue of its main upper plate-shaped part which extends above the upper face of the card when the latter is in place in the housing.

The invention aims more particularly to provide a connector suitable for connecting another type of card, also standardized, which especially makes it possible to store a large amount of data in order thus to constitute a removable data medium which is generally of small size but of high storage capacity. Several embodiments of such a type of memory card, also called a "flash" card, the dimensions of which are becoming smaller and the storage capacity of which is becoming greater, are known.

This is especially the case with the so-called "MMC" (MultiMediaCard) card sold by the company SANDISK, the dimensions of whose body containing the integrated circuits and the positioning of its conducting contact pads are specifically defined by its manufacturer and by an association of users so as to have a standardized-type definition of such a card. This definition forms the subject, for example, of the publication MultiMediaCard System Specification Version 1.4 Official Release @ February 1998 MMCA.

This type of MMC card is generally similar in its shape and in its proportions to a MICROSIM card, especially in that it includes polarizing means for correctly and unambiguously positioning it in a connector and/or in a read/write device, which consist of a cut corner formed at one of the corners of the card, which is generally rectangular in shape.

On the other hand, the contact pads on the MMC card consist of a series of adjacent conducting pads which are aligned transversely along the short front end transverse edge of the MMC card in which the polarizing cut corner is also formed.

However, the overall dimensions of the MMC card, or of other cards of the same type, are larger than those of a MICROSIM card and the design of a connector proposed in the above-mentioned French Patent Application is not perfectly suitable for this type of card insofar as it results in a very large overall size of the connector, this being a significant drawback insofar as the surface area occupied by the insulating support of the connector on the upper face of a printed-circuit board on which it is mounted is large, this surface area then being, of course, no longer available for mounting other electronic components on the printed-circuit board.

The invention therefore aims to provide a novel design of electrical connector of the above-mentioned type which is suitable for connecting a smart card, especially a card of MMC type, and which remedies the above-mentioned drawbacks, especially those relating to the size of the connector.

To this end, the invention provides an electrical system comprising a connector and a contact-type smart card characterized in that the connector electrical-contact elements have free connection ends which all extend longitudinally beyond the front transverse face of the insulating support, and in that the main portion of the body of the card extends rearwards, in a cantilevered fashion, beyond the rear transverse face of the support.

Thus, the overall dimensions of the connector are reduced and the surface area of the printed-circuit board which extends beneath the main portion of the body of the card arranged so as to be cantilevered from the connector may carry other electronic components.

According to other characteristics of the invention :
- the contact blades extend longitudinally forwards in the insulating support, from their free contact ends longitudinally forwards in the direction of the front transverse wall of the insulating support, and are then bent so as to form vertical sections in order for their free connection ends to lie in a same plane ;
- the length of the front portion of the card accommodated in the housing bounded longitudinally by the said front transverse bottom edge and by the said rear transverse face of the support is less than the transverse width of the card ;
- the length of the front portion of the card accommodated in the housing bounded longitudinally by the said front transverse bottom edge and by the said rear transverse face of the support is equal to approximately one third of the length of the card ;
- the insulating support is extended longitudinally rearwards, beyond the said rear transverse face, by two opposed lateral extensions in which the rear parts of the parallel longitudinal edges of the housing are formed for guiding the card laterally ;
- all the conducting pads on the card are aligned transversely, especially along the front end transverse edge of the card and the contact ends are aligned transversely apart from at least one of these ends which is offset longitudinally rearwards so that, when the card is inserted longitudinally from the rear to the front into its housing, the corresponding conducting pad on the card comes into contact with this offset contact end before the other conducting pads on the card each come into contact with one of the transversely aligned contact ends ;
- it includes a metal cover for holding the card in the housing which extends above the upper face of the card and which is bounded longitudinally by two transverse edges, namely a front transverse edge and a rear transverse edge, located longitudinally approximately in line with the said front transverse bottom edge of the housing and in line with the said rear transverse face of the insulating support, respectively, and the cover has tabs for fixing it, by soldering, to the upper face of a board which carries the connector, especially on conducting tracks connected to the earth plane of a printed-circuit board ;
- the cover is made in the form of an upper plate which extends above the upper face of the card and the parallel lateral edges of which are extended by two flanges bent over downwards for mounting the cover on the insulating support ;
- the two mounting flanges form slideways allowing the cover to be mounted on the insulating support by sliding in the longitudinal direction ;
- the metal cover includes integrally formed retractable means for providing longitudinal retention of the card in its housing, against the elastic return force which is applied to it by a spring for automatically ejecting the card, which means engage with at least one portion of the rear transverse edge of the card ;
- one of the said lateral extensions extends approximately the entire length of a first lateral edge of the card, the said retention means engage with that part of the rear transverse edge of the card which is adjacent to the said first lateral edge and the ejection spring engages with a portion of the front transverse edge of the card adjacent to the second lateral edge of the card ;
- the automatic ejection spring is made in the form of a metal blade produced integrally with the metal cover ;
- the front transverse edge of the card has a corner cut at approximately 45° and intended to engage with a corresponding surface inclined at 45° formed at one of the ends of the front transverse bottom edge of the housing in order to form polarizing means defining a correct position for the card in the housing of the connector ;
- the connector includes a switch for detecting the presence of the card in the contact position in the housing ;
- the switch is carried by the insulating support and includes an actuator for tripping it, with which a portion of the front transverse edge of the card engages ;
- the actuator is placed close to the said inclined surface and in that the said portion of the front transverse edge of the card consists of the cut corner of the card ;
- the switch is of the type normally closed in the absence of a card and comprises an elastically deformable switch blade which is integrally produced with the metal cover and which extends vertically and longitudinally from the upper plate of the latter into the housing with its free end which, in the absence of a card, is in elastic bearing contact against a contact end of one of the contact elements of the connector in order to establish a switching circuit between the free connection end of this contact element and an electrical earth plane to which the metal cover is connected ;
- a switch tab of the cover extends horizontally below the lower face of the insulating support opposite the free contact end part of a contact element which is extended vertically downwards by a switch blade, especially in the form of a loop, in order to form a normally-open switching circuit which is closed upon insertion of the card which causes the contact end to bend elastically downwards in order to bring the loop into contact with a facing portion of the said switch tab of the cover ;

Other characteristics and advantages of the invention will appear upon reading the detailed description which follows, for the comprehension of which reference will be made to the appended drawings in which :
- Figure 1 is a top and three-quarter rear perspective view which illustrates an example of a connector , shown in the position mounted on a printed-circuit board and in association with an MMC-type card in the approach position for the purpose of inserting it into the connector ;
- Figure 2 is a top view of the connector in Figure 1, in which the card is illustrated in the inserted connection position in the connector ;
- Figure 3 is a top view similar to that in Figure 2, in which the connector is illustrated without a card ;
- Figure 4 is a longitudinal sectional view on the line 4-4 in Figure 3 ;
- Figure 5 is a side view in the direction of the arrow F5 in Figure 3 ;
- Figure 6 is a longitudinal end view in the direction of the arrow F6 in Figure 3, with a detailed part illustrated in cross section on the line 6-6 in Figure 4 ;
- Figure 7 is a perspective view on a larger scale of the connector illustrated in Figure 1, including modifications making it easier to fit its metal cover ;
- Figure 8 is a top view which illustrates only the metal cover of the connector ;
- Figure 9 is a bottom view of the cover of the connector ;
- Figure 10 is an end view in the direction of the arrow F10 in Figure 8 ;
- Figure 11 is a top and three-quarter rear perspective view which illustrates a first variant of a connector, comprising retractable means for retaining the card in the connection position in the connector opposing an ejection force applied to the card by an ejection spring, the card being shown in Figure 11 in this position in its housing in the connector ;
- Figure 12 is a view similar to that in Figure 11, in which the card is illustrated in a position in which it is partially ejected from the connector ;
- Figure 13 is a view similar to that in Figure 12, which shows the connector without a card ;
- Figure 14 is a view similar to that in Figure 13, which shows the connector without its metal cover ;
- Figure 15 is a top and three-quarter rear perspective view which illustrates a variant of the connector illustrated in Figure 12 which differs from it due to the design of the spring for automatically ejecting the card ;
- Figures 16 and 17 are views similar to those in Figures 3 and 6, which illustrate another variant of a connector with regard to a first embodiment of a switch for detecting the presence of a card in the contact position ;
- Figures 18 to 20 are views similar to those in Figures 3, 4 and 6, which illustrate another variant of a connector, comprising another embodiment of a switch for detecting the presence of a card in the contact position ;
- Figures 21 and 22 are views similar to those in Figures 18 and 20, which also illustrate another variant of a connector comprising another embodiment of a switch for detecting the presence of a card in the contact position ;
- Figures 23A, 23B and 23C are three similar views, in longitudinal section on the line 23-23 in Figure 21, which illustrate three successive longitudinal insertion positions of the card in its housing ;
- Figure 24 is a view on a larger scale of the detail D24 in Figure 21, with partial cut-away of the corresponding portion of the cover of the connector ;
- Figure 25 is a top and three-quarter front perspective view which illustrates a double connector including an upper connector made according to the teachings of the invention with its two cards, namely the lower and upper cards, in the contact position, the double connector being shown mounted on the upper face of a printed-circuit board ;
- Figure 26 is a view similar to that in Figure 25, in which the double connector is illustrated in its metal cover ;
- Figure 27 is a view similar to that in Figure 26, in which the double connector is illustrated without an upper card;
- Figure 28 is a view similar to that in Figure 27, in which the double connector is illustrated without a lower card ;
- Figure 29 is a top and three-quarter front perspective view of the double connector shown in Figure 28 ;
- Figures 30 to 33 are views similar to those in Figures 3 to 6, which relate to the double connector illustrated in Figure 25 but shown without any card ;
- Figure 34 is a top and three-quarter rear perspective view which shows the lower connector of the double connector in Figure 25 ;
- Figure 35 is a top and three-quarter rear perspective view which shows the upper connector of the double connector in Figure 25 ;
- Figure 36 is a three-quarter front perspective view of the upper connector in Figure 35 ;
- Figure 37 is a bottom and three-quarter-rear perspective view of the upper connector in Figure 35 ;
- Figure 38 is a top and three-quarter-rear perspective view of the cover of the double connector in Figure 25 ;
- Figure 39 is a top and three-quarter rear perspective view which illustrates a double connector of the type illustrated in Figure 25, but having a modified cover incorporating a switch blade for detecting the presence of the upper card ;
- Figure 40 is a bottom and three-quarter rear perspective view illustrating the cover of the double connector illustrated in Figure 25 and showing a modification of its lower part in order to form a switch for detecting the presence of the lower card in the connector ; and
- Figure 41 is a diagrammatic representation of the lower face of an MMC-type card.

In the description which follows, identical, similar or analogous components will be denoted by the same reference numbers.

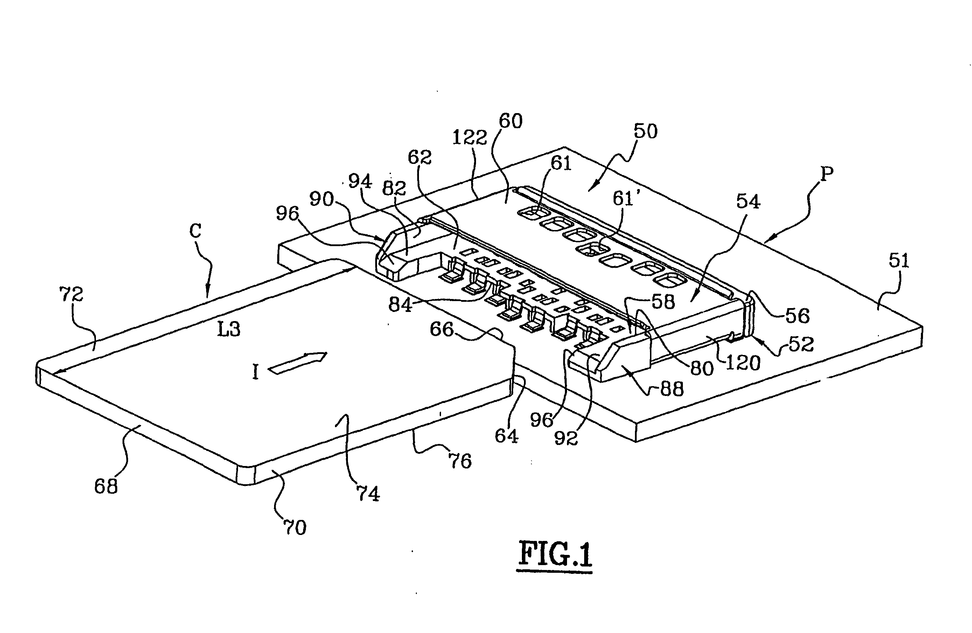

Figure 1 shows an electrical connector 50, which connector is illustrated in the position mounted in and fixed to the upper face 52 of a board P which carries the connector 50 and which is, for example, a printed-circuit board whose upper face 52 has conducting tracks, not shown in detail in the figures.

The connector 50 essentially consists of a generally plate-shaped insulating support 52 made of plastic and of a metal cover or lid 54 which especially extends above the plane and horizontal upper face 56 of the insulating support 52 in which is formed a card housing 58 which is open vertically upwards opposite the upper plate-shaped main part 60 of the cover 54.

The housing 58 is bounded vertically downwards by a horizontal lower bottom wall 62 and it is open longitudinally rearwards in order to present a slot for the longitudinal insertion of the front portion of an electronic-memory card C which, for example, is an MMC-type card.

The card C, of known design, has a rectangular general shape bounded longitudinally by a front end transverse edge 66, by a rear end transverse edge 68 and by two parallel and opposed lateral edges 70 and 72.

The front corner corresponding to the intersection of the edges 66 and 70 is a standardized 45° cut corner 64 for polarizing the position and orientation of the card C.

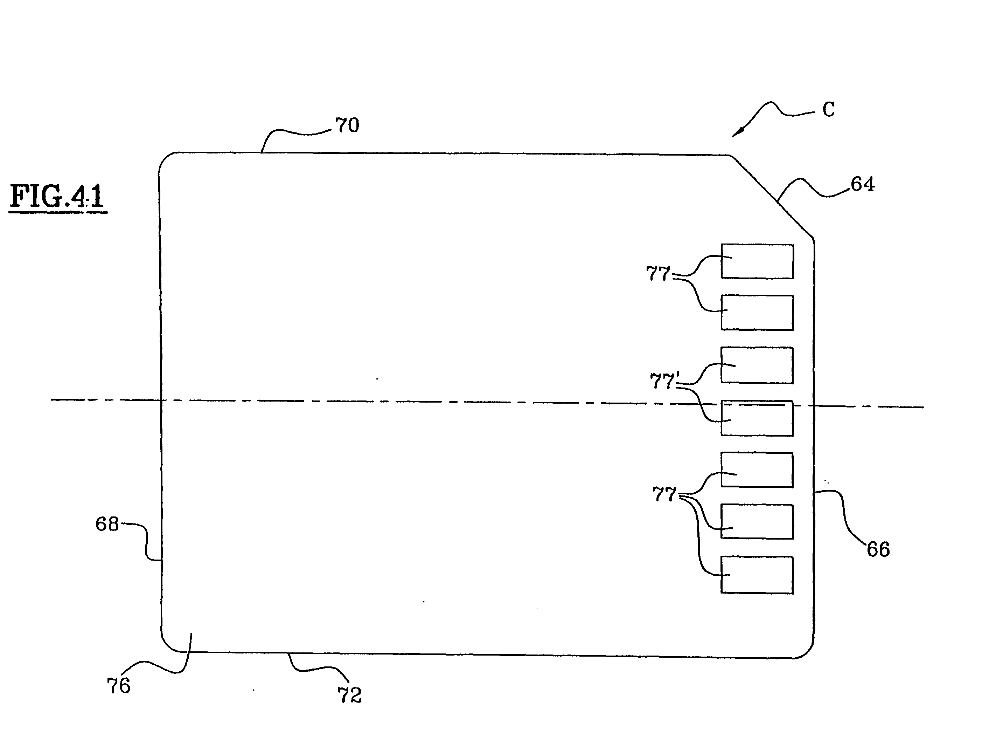

Moreover, the card C has a horizontal free upper face 74 and an opposed and parallel lower face 76 which is oriented downwards in the direction of the printed-circuit board and which has (see Figure 41), near its front end transverse edge 66, a series of seven conducting contact pads 77 and 77' which are all aligned transversely and which are adjacent to the front end transverse edge 66. According to one aspect of the connector, the contact pads 77 and 77' are oriented downwards in the direction of the printed-circuit board P.

The card C is thus able to be inserted, in the direction I indicated in Figure 1, from the rear to the front into the housing 58 until its front transverse edge 66 butts against a front transverse bottom edge 78 by which the housing 58 is bounded at the front.

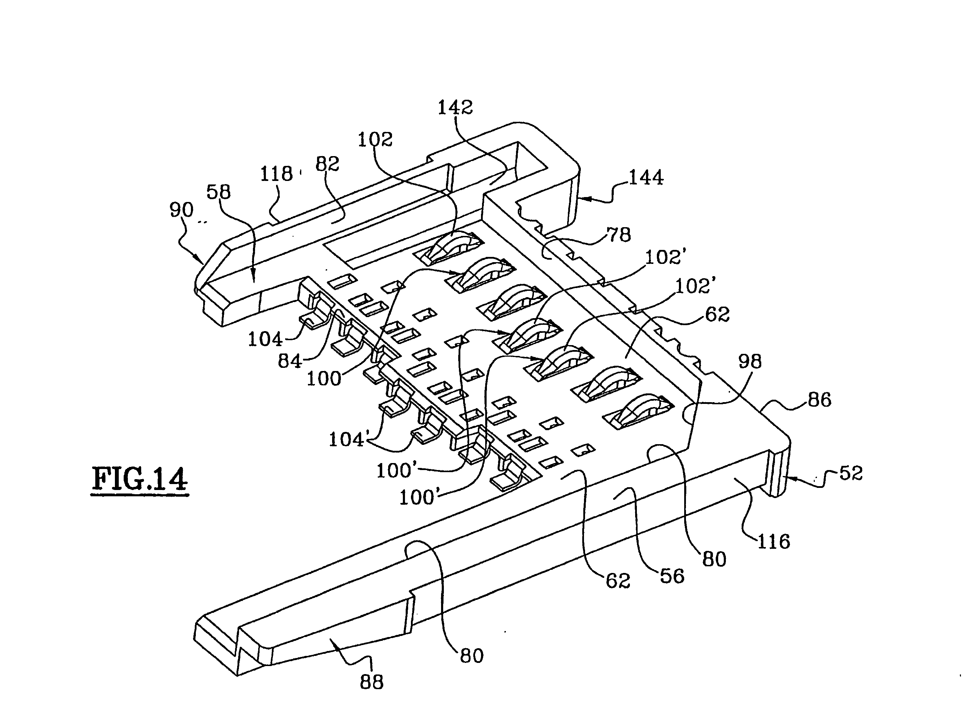

The opposed lateral edges 70 and 72 of the card C are slidingly guided in the housing 58 by parallel and opposed longitudinal edges 80 and 82 respectively (see Figure 14) by which the housing 58 is bounded transversely.

As may be seen in the figures, the housing 58 proper, in which the front portion of the card C is accommodated, is bounded transversely at the front by the front transverse bottom edge 78 and transversely at the rear by a rear end transverse face 84 of the insulating support 52.

Moreover, the insulating support 52 is bounded transversely at the front by a front transverse face 86.

In order to improve the lateral sliding guidance of the card C as it is being inserted into or extracted from the housing 58, the body of the insulating support 52 has two opposed longitudinal extensions 88 and 90 which extend longitudinally rearwards beyond the rear transverse face 84 in order to increase the length of the longitudinal guiding edges 80 and 82.

The extensions 88 and 90 also have horizontal parts 92 and 94 which extend the plane of the bottom 92 with an insertion chamfer 96.

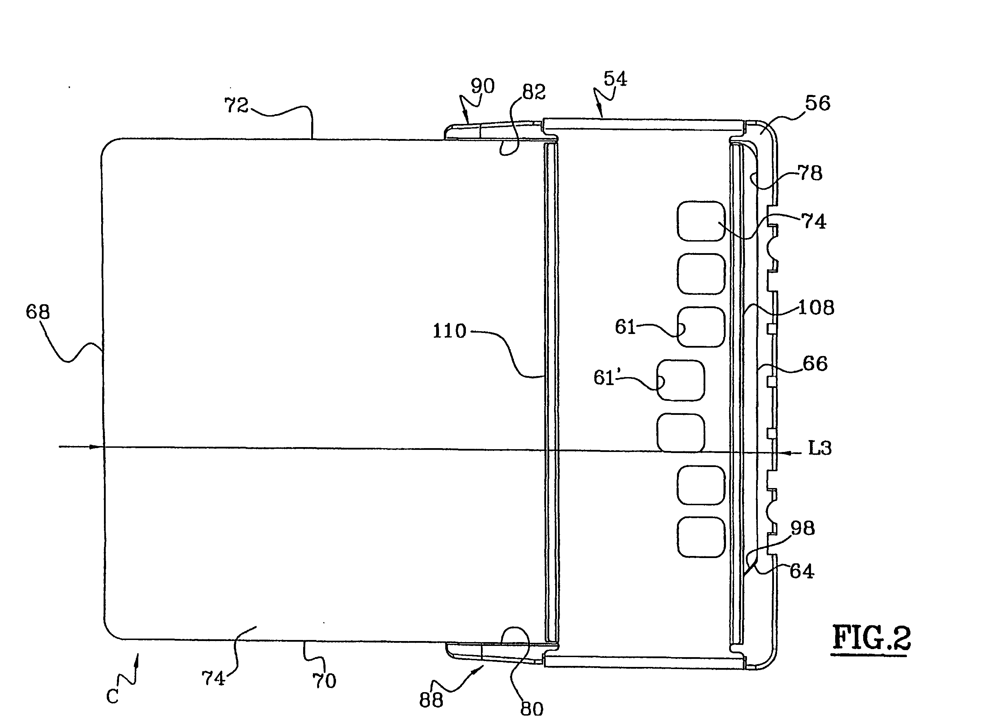

In order to fulfil the function of polarizing the position and orientation of the card C, the corner of the housing 58 corresponding to the intersection of the front transverse bottom edge 78 with the longitudinal edge 80 has a vertical face 98 inclined at 45° which is complementary to the shape and to the size of the cut corner 64 as may be seen in Figure 2, when the card C is inserted into the correct position.

According to a known technique in the field of connectors for connecting printed-circuit boards, the insulating support 52 carries a series of electrical-contact elements 100 which are made in the form of elastically deformable blades, a free contact end 102 of which projects vertically above the plane of the bottom 62 in order to engage with the conducting pads on the lower face 76 of the card C.

In the example illustrated in the figures, there are seven elastic contact blades 100, this being equal to the number of contact blades 77 and 77', five of these blades 100 being aligned transversely near the front transverse bottom edge 78 of the housing 58 whereas the other two blades 100' are offset longitudinally rearwards so that their two contact ends 102' are offset longitudinally rearwards.

The purpose of this offset is to comply with a requirement pertaining to the standardization of the method of connection to the MMC card, which requires two special contact pads 77' to be connected to a power supply before the other pads are connected. For this purpose, the two contact ends 102' are offset longitudinally rearwards with respect to the contact ends 102 of the other five contact elements 100 and in the same way their associated connection ends 104' are offset longitudinally rearwards with respect to the other five connection ends 104.

All the contact blades 100 and 100' are identical and each has a rear free connection end 104, 104' which terminates approximately in line with the rear transverse face 84, each end 104, 104' being designed here in the form of a lead to be soldered onto the surface of the upper face 51 of the printed-circuit board P.

Because of the rearward longitudinal offset of two elastic blades 100', the insulating support has a corresponding extension 106 which extends longitudinally rearwards slightly beyond the vertical plane corresponding to the rear transverse face 84.

The length of the aligned contact pads 77 and 77' is such that it makes it possible to obtain a reliable electrical connection to all the pads when the card is in the butted contact position, despite the slight offset of the ends 102'.

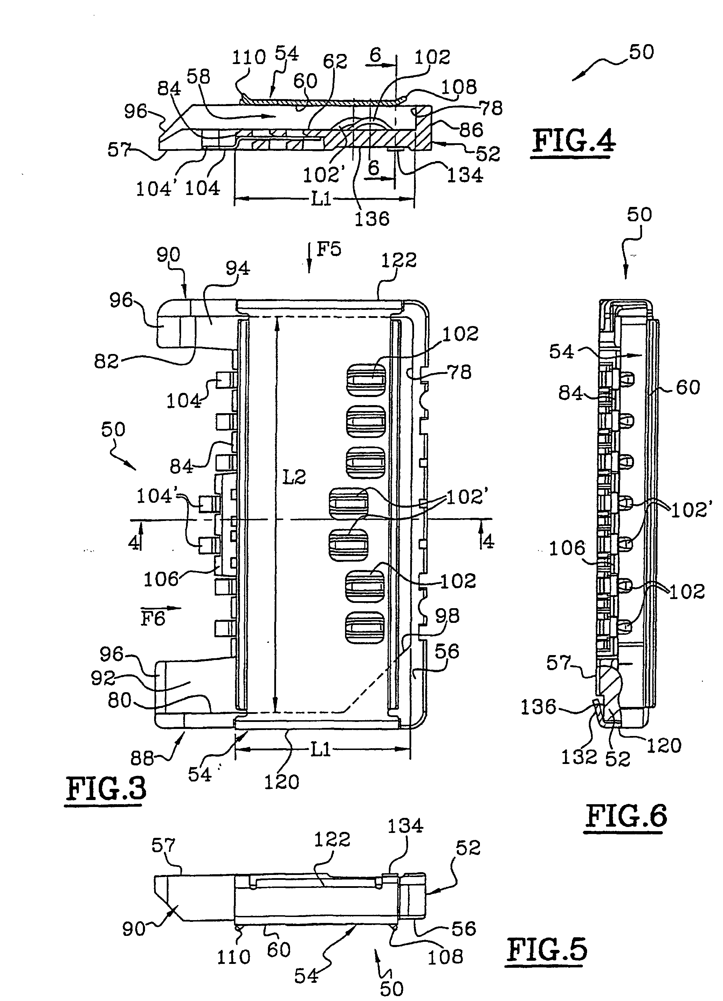

As may be seen especially with regard to Figures 3 and 4, the total length L1 of the housing 58 which accommodates the front portion of the card C is markedly less than the transverse width L2 of the housing 58 which itself is approximately equal to the transverse width of the card C.

Moreover, the transverse length L1 bounded by the front transverse bottom edge 78 and the rear transverse face 84 here is substantially equal to about 1/3 of the total length L3 of the card C.

Thus, as may be seen more particularly in Figure 2, it is the approximately two thirds of the card C which extend longitudinally rearwards out of the housing 58 so as to be cantilevered above the facing portion of the upper face 51 of the board P.

As may also be seen in Figures 3 and 4, the length of the upper plate 60 of the cover 54, bounded by its front transverse edge 108 and its rear transverse edge 110, is also approximately equal to the length L1 of the housing 58, that is to say its edges 108 and 110 extend approximately in line with the front transverse bottom edge 78 and with the rear transverse face 84 of the insulting support 52.

By virtue of this dimensioning of the cover 54, the connection ends 104 and 104' are completely clear (see Figure 2) and visible in order to facilitate the infrared soldering operations and to allow a visual inspection of the soldered joints as well as a possible subsequent repair, by manual intervention. Moreover, the lateral extensions 88 and 90 protect all the output leads 104 and 104' during manufacture and transportation of the connectors.

As may be seen especially in Figure 4, the free connection ends 104 and 104' lie substantially in the plane of the lower plane face 57 of the insulating support 52.

According to a general design known, for example, from the above-mentioned French patent application, the metal cover 54 has, in order to mount it on the insulating support 52, two parallel and opposed lateral flanges 120 and 122 which extend vertically downwards along corresponding portions 116 and 118 of the vertical external longitudinal faces of the insulating support 52 (see Figure 14, for example).

The flanges 120 and 122 are shaped so as to form slideways, that is to say they are extended horizontally beneath the insulating support 52 by inwardly-bent horizontal branches 124 and 126 which are accommodated in corresponding housings formed in the lower face 57 of the insulating support 52 so as not to extend beyond the plane of this face.

According to one characteristic of the connector, the cover 54 has, near its front transverse edge 108, two lower horizontal tabs 132 and 134 which extend from the flanges 120 and 122 in order to be accommodated in recesses 136 in the lower face 57 so that the tabs 132, 134 can be soldered, for example by reflow soldering, to the corresponding conducting tracks on the printed-circuit board P (these not being shown) which are preferably connected to the earth plane of the electrical circuit of the printed-circuit board so as to electrically connect the metal cover 54 to this earth plane.

Mechanically fastening, by soldering, the cover 54 by means of its soldering tabs allows the connector 50 to be mechanically held in place at its front part, without requiring the use of any additional piece or component. In addition, this fastening of the front part balances the fastening of the rear part, provided by the soldering of the output leads 104, 104'. The gap between the cover 54 and the insulating support 52 makes it possible to achieve automatic centring positioning when the connector is put into place in order to solder it with its front part having the soldering tabs which always come into contact.

In addition, the cover 54 compensates for the forces involved if a user attempts to lift the card C which then bears against the plate of the cover 54 which is soldered to the board P, no force being transferred to the support 52 or to the output leads 104 and 104'.

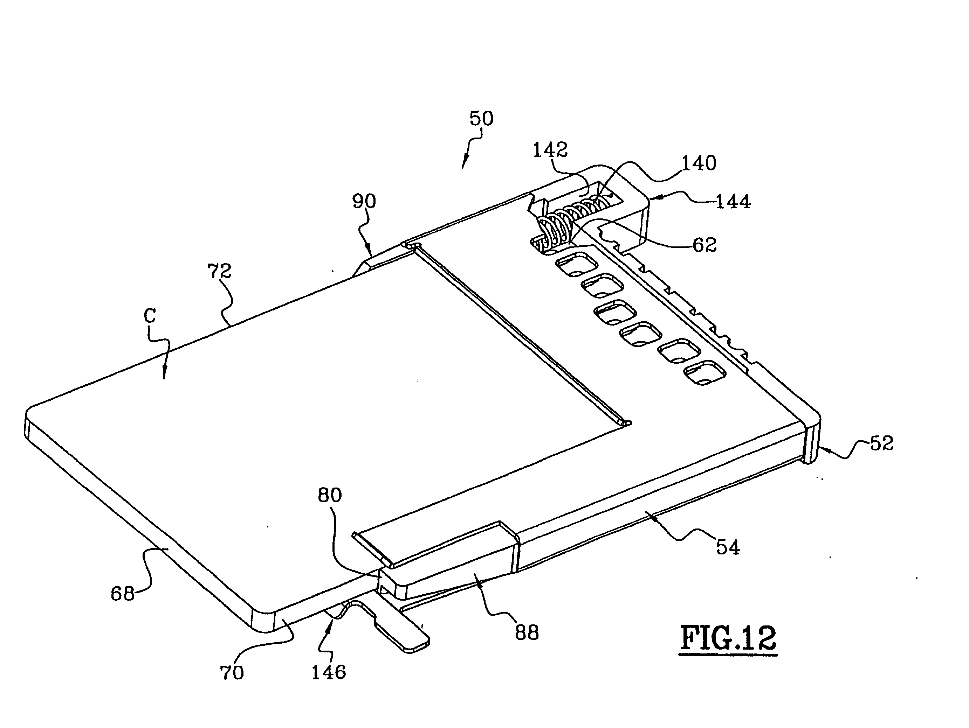

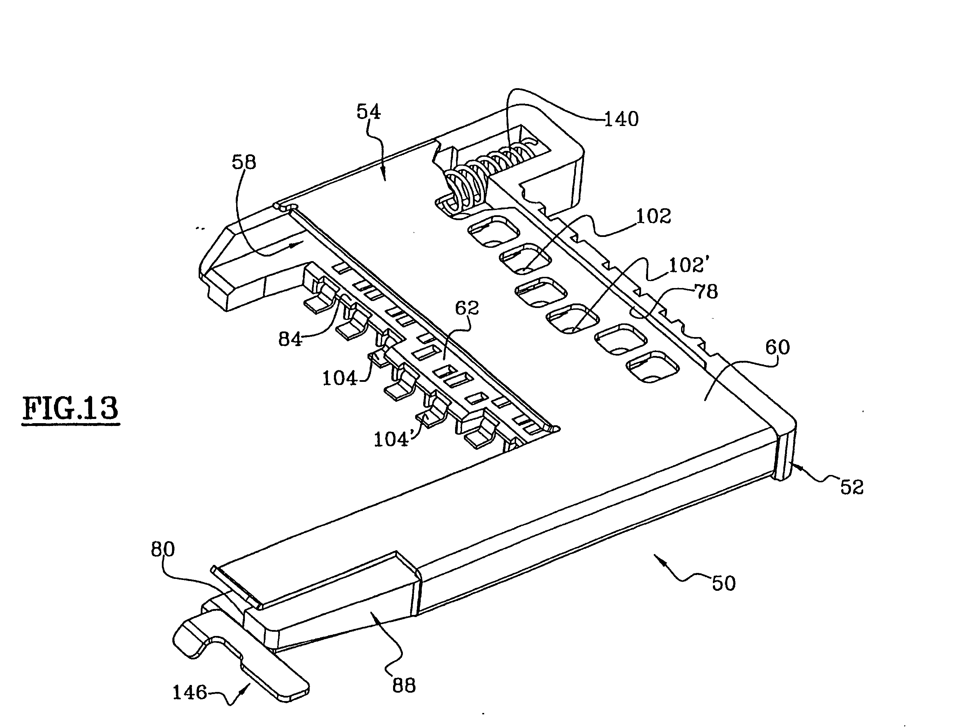

In the variant illustrated in Figures 12 to 14, the connector 50 includes a first embodiment of means for automatically ejecting the card C which has, according to a design known especially from French Patent Application No. 98/06852, to the content of which reference may be made in order to understand the embodiment details thereof, an ejection spring 140 which here is a helical compression spring mounted in a semicylindrical housing 142 open to the top and formed in the bottom 62 of the housing 58 and partly in a rear longitudinal extension 144 of the insulating support which is arranged laterally in the extension of the rear longitudinal extension 90 in line with the lateral side 72 of the card C.

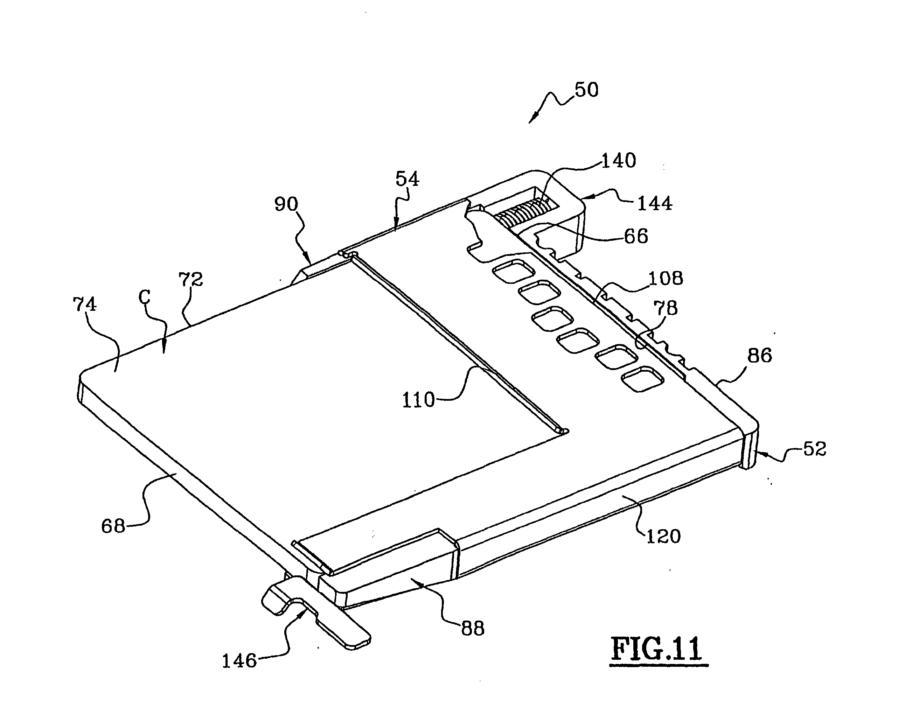

The automatic ejection means also include a retractable retention lip or tab 146 which, in the inserted position of the card illustrated in Figure 11 and against the force which is applied by the spring 140 to the front transverse edge 66 of the card C, provides longitudinal retention of the latter inside the housing 58.

If the retention tab 146 is retracted, as illustrated in Figure 12, the compressed spring 140 relaxes and causes total or partial ejection of the card C out of the housing 58.

In order to allow the arrangement of the retention tab 146, the rearward longitudinal extension 88 of the insulating support 52, which lies on the opposite side to the extensions 90 and 144 that are adjacent to the point of action of the spring 140 on the front transverse edge 66 of the card C, extends substantially over the entire length of the lateral edge 70 of the card C, as may be seen in Figure 11.

Thus, the action of the spring 140, which tends to make the card C pivot in a swinging motion in its plane about a vertical axis, is counteracted by the very long internal longitudinal guiding edge 80 which extends over the entire length of the rearwardly elongate longitudinal extension 88.

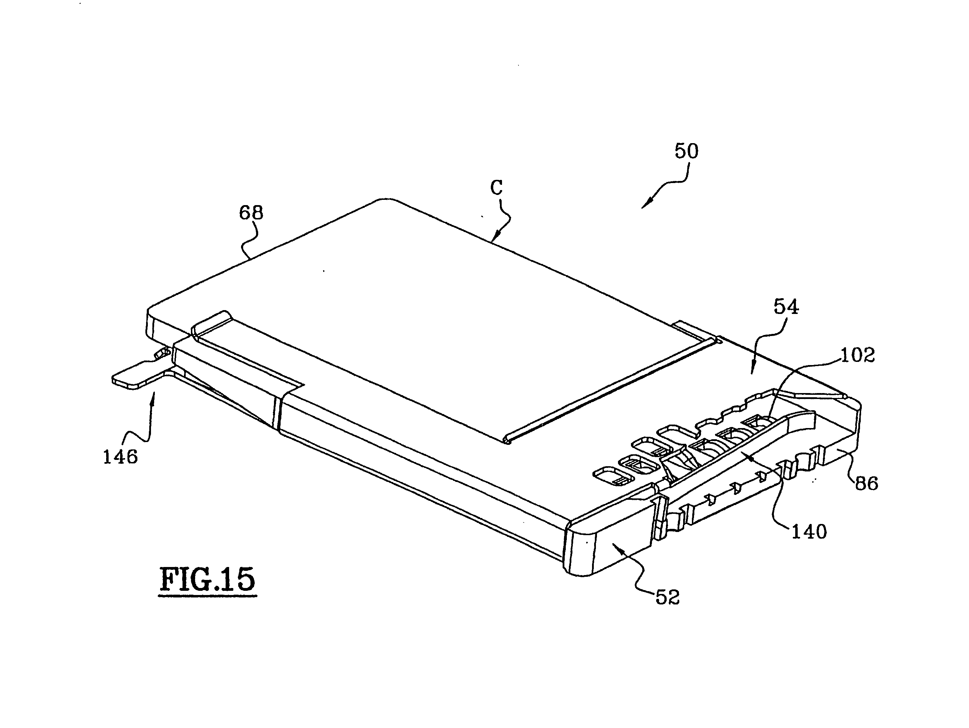

The variant illustrated in Figure 15 differs from the previous one only by the design of the ejection spring 140, which here is an elastically deformable blade made as one piece with the metal cover 54 by cutting and bending.

By virtue of this design, if it is compared with the previous one, the length of the insulating support 52 at the front is not extended beyond its front transverse face 86, that is to say there is no excrescence of the type of that 144 which partly accommodates the coil spring 140.

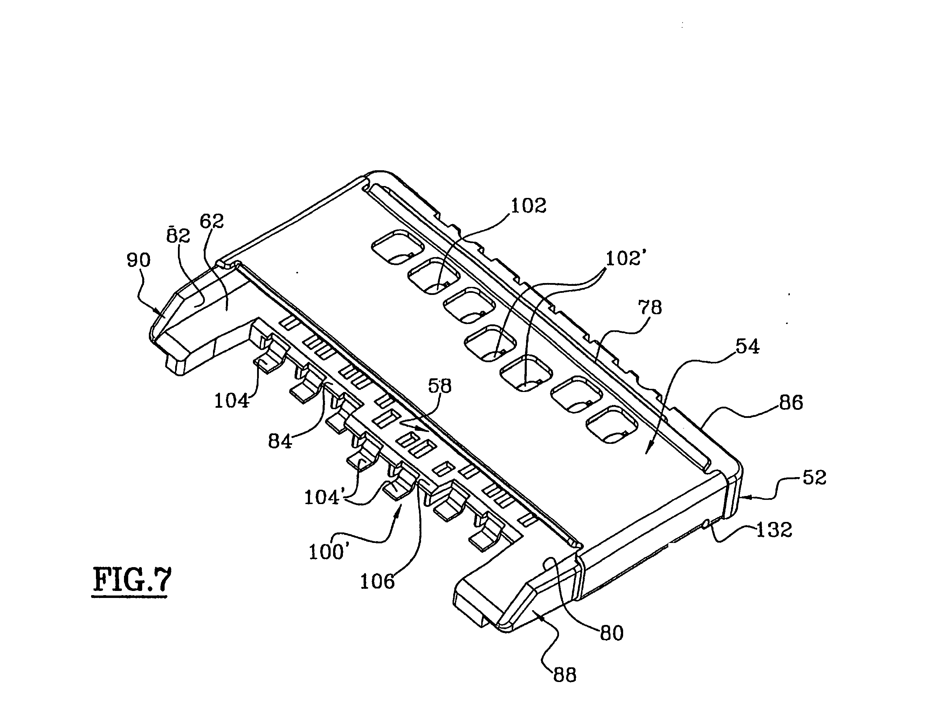

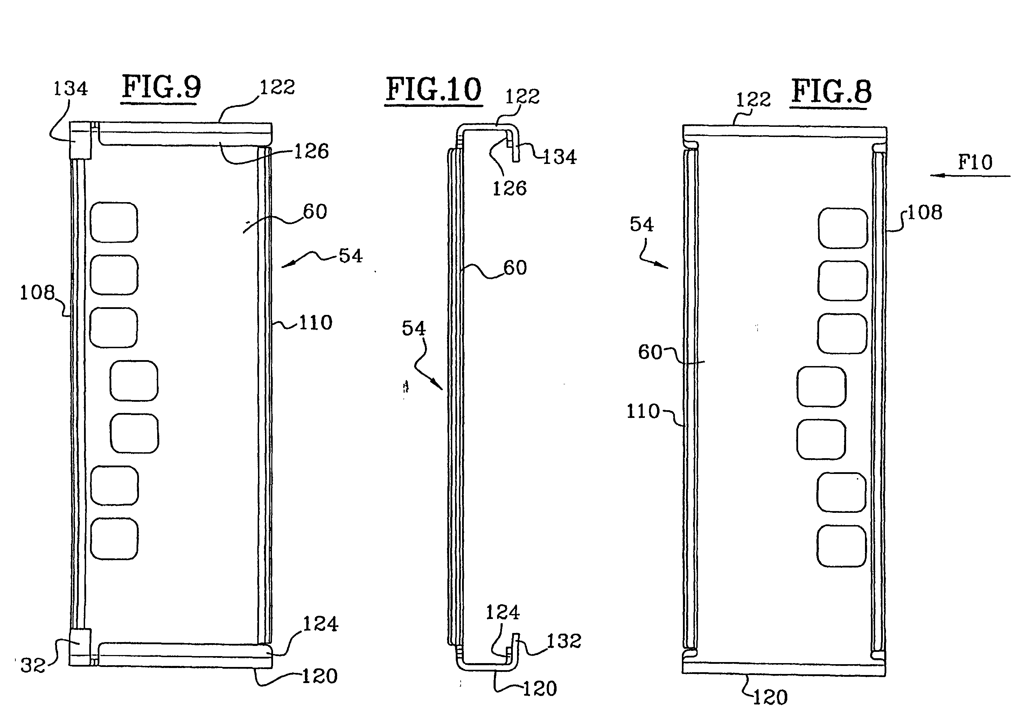

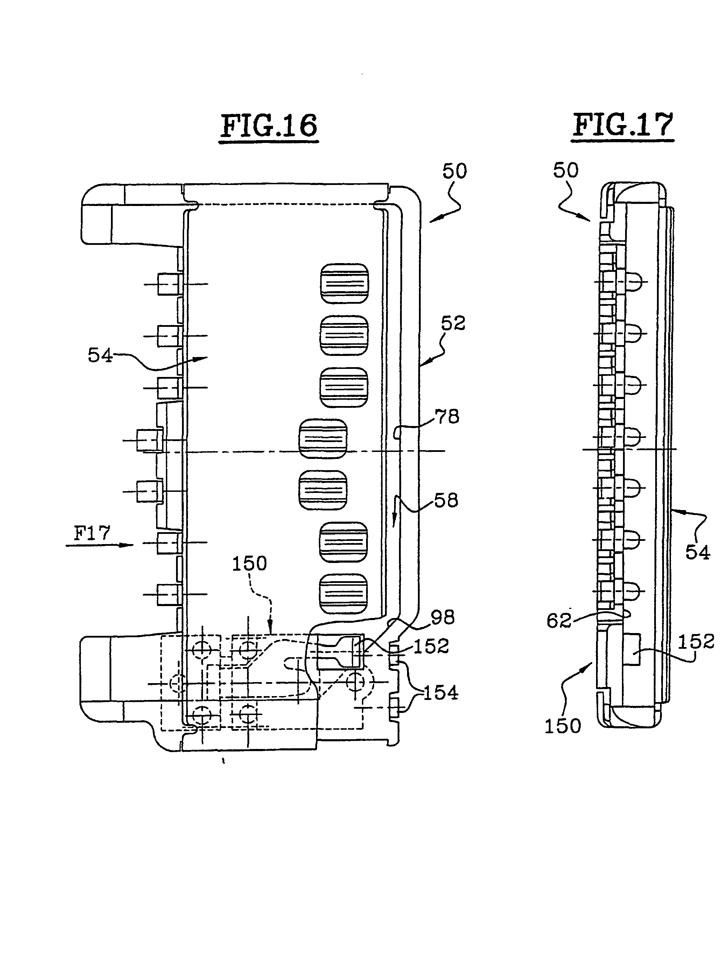

In the variant shown in Figures 16 and 17, a connector 50 of the type illustrated in Figures 1 to 10 has been shown, that is to say without means for automatically ejecting the card C, but including a switch 150 for detecting the presence of a card C in the fully inserted position in the housing 58.

In this first example of the arrangement of a switch 150, the latter is of a known general design and is a component attached to the insulating support, comprising an actuator in the form of a pedal 152 for tripping it.

When the front transverse edge of the card C engages with the pedal 152, it causes the switch 150 to trip.

In order to ensure that the switching signal is tripped as late as possible during the insertion movement of the card C, the actuator in the form of a pedal 152 is advantageously arranged close to the 45° inclined vertical face 98 for polarizing the card, that is to say it is the cut corner 64 of the card which engages with the pedal 152 at the very end of the insertion travel of the card C.

The switch 150 has two output or connection leads 154 which extend longitudinally forwards in order to be connected to corresponding conducting tracks on the printed-circuit board P.

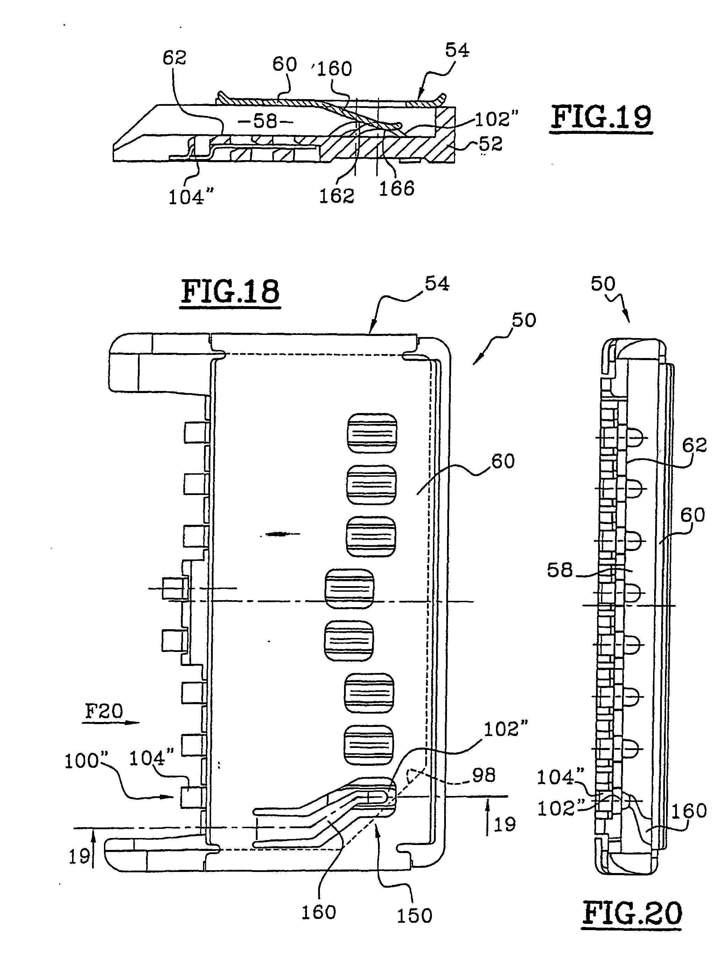

The switch for detecting the presence of the card C, the design of which is illustrated in Figures 18 to 20, is of another type, that is to say it consists essentially of an eighth contact blade or element 100" and of a switch blade 160 made integrally with the upper plate 60 of the cover 54.

As may be seen in Figures 18 to 20, the switch blade 160 extends longitudinally forwards and vertically downwards inside the housing 58 so as to present an inclined ramp profile 162 with which the front transverse edge of the card C, and more particularly its cut corner 64, is able to engage insofar as the lower free end 166 of the switch blade 160 engages with the electrical contact 100", 102" which is located in line with the inclined polarizing face 98.

In its rest state illustrated in Figures 19 to 20, that is to say in the absence of a card C, the end 166 bears elastically against the contact end 102" of the contact element 100" which itself is slightly bent vertically downwards.

As soon as the card C acts via its cut corner 64 simultaneously on the switch blade 160 and on the contact end 102", the switching circuit opens, that is to say the blade 100" is no longer connected to the earth plane of the circuit via the switch blade 160 integrated into the metal cover 54.

As may be seen in Figure 18, in a top view, the switch blade 160 has an S-shaped sharply-angled profile so as to use a contact 100" which is similar to the other contact elements 100 and is placed transversely with the same spacing, this solution also having the advantage of placing the point at which the switch trips close to the vertical inclined face 98 in order to act at the last moment of the insertion travel of the card via the cut corner 64 of the latter.

This arrangement makes it possible to guarantee that, during insertion of the card C, the switch is only actuated at the end of insertion travel, that is to say after the contacts between the contact ends 102 and 102' and the pads 77 and 77' have been established, the switch thus acting as a means of detecting the end of insertion travel of the card into the connector. This same sequence occurs in the reverse order when removing the card C from the connector 50.

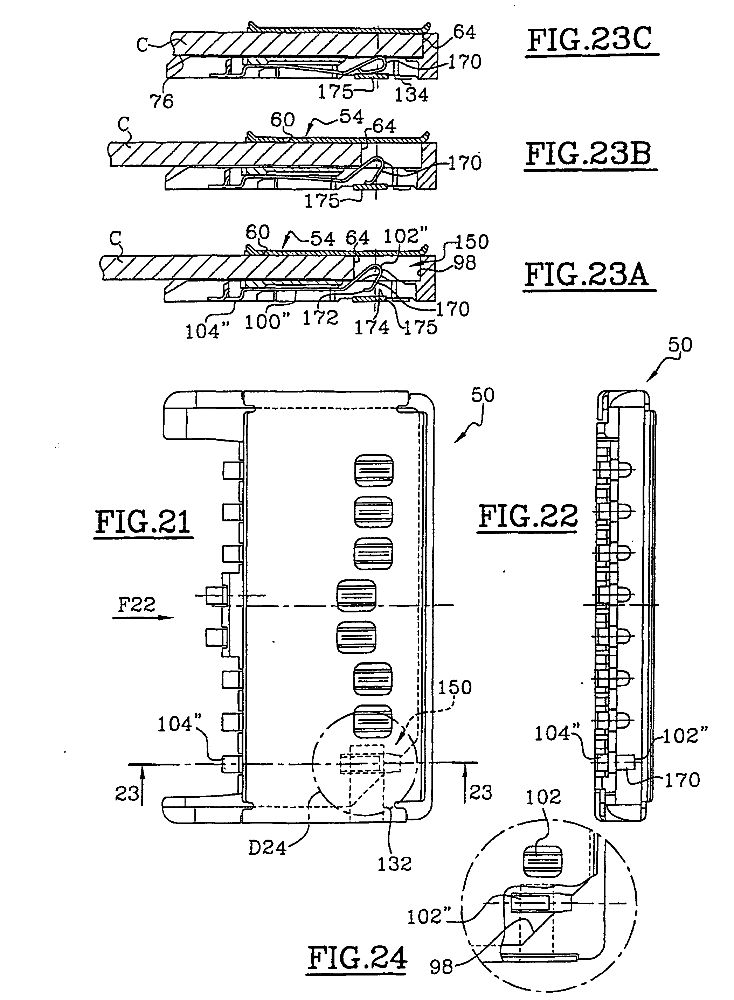

Although the switch described above with reference to Figures 18 to 20 was of the type normally closed - in the absence of a card - the switch whose design is illustrated in Figures 21 to 24 is of the type normally open, that is to say, in the absence of a card, the switching circuit is broken.

The switch 150 illustrated in Figures 21 to 24 also makes use of a contact blade 100" which occupies the same position with respect to the other contacts as that mentioned above, but the free contact end 102" of which is shaped in the form of a loop, that is to say it is extended inside vertically downwards by a switch blade 170 which, when the switch is open, in the absence of the card C, is extended by its lower end 172 opposite the upper face 174 of a switch tab 175 of the metal cover 54 which, for this purpose extends transversely inwards beneath the switch blade 170.

The operating cycle for closing the switch 150 is illustrated in Figures 23A to 23C which show that the front transverse edge of the card C, i.e. more specifically the cut corner 164, acts on the end 102" of the blade 100" so as to bend it elastically downwards and to bring the lower end 172 of the loop which comprises the switch blade 170 into contact with the switch tab 175 which is connected to the earth plane of the printed circuit through the cover 54 which itself is connected to the earth plane by soldering.

The shape of the loop forming the switch blade 170 is such that a self-cleaning effect is produced during the closing cycle by the lower end 172 engaging with the upper face 174 of the tab 132.

In this design, if it is compared with the previous one illustrated in Figures 18 to 20, all the elastically deformable contact elements used as signal contacts or for producing the switch act everywhere only on the lower face 76 of the card C which bears vertically upwards against the facing internal face of the upper plate 60 of the cover 54.

As may be seen especially in Figure 2, the upper plate 60 of the cover 54 has a series of holes 61 and 61' which, since the contact ends 102 and 102' face upwards, make it possible to test the equipment after the components and connectors have been soldered, by connecting directly to the ends which are accessible in the absence of a card C. The forwardly offset test holes 61' are arranged in such a way that the region separating them from the rear transverse edge 110 allows the connector to be picked up, in pick-and-place technology, appreciably more in line with the centre of gravity of the connector.

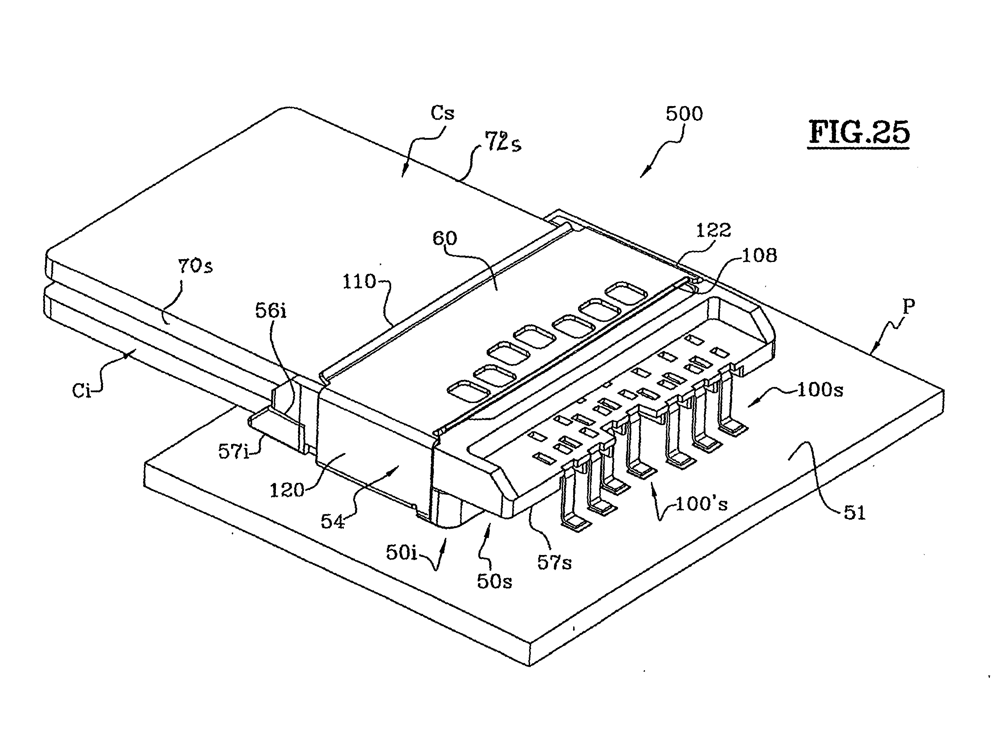

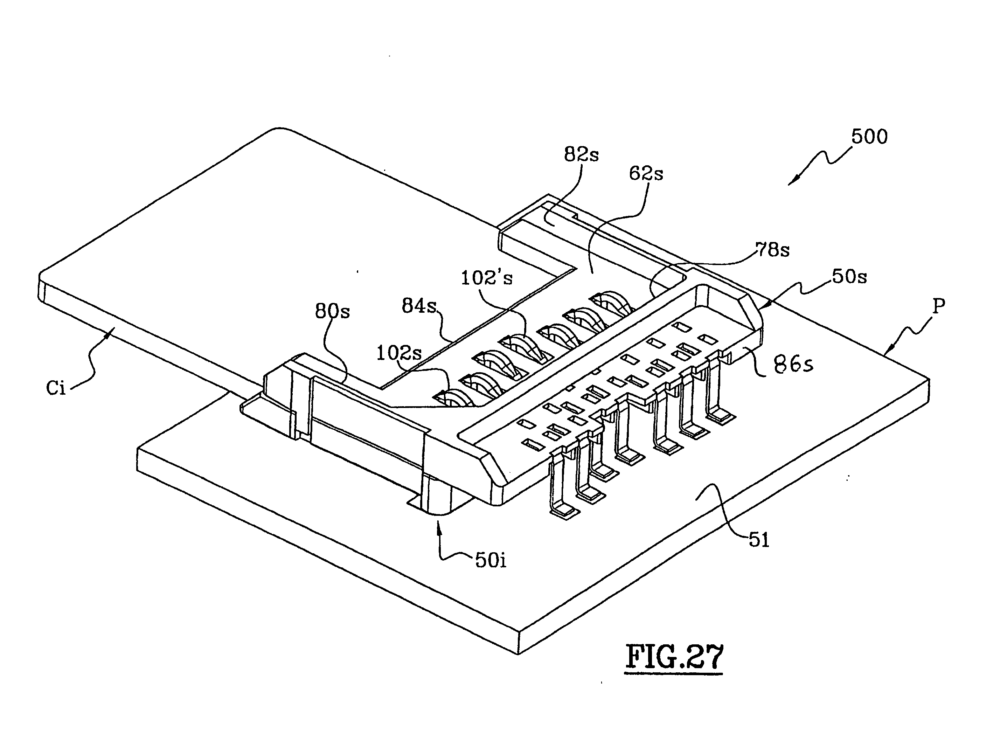

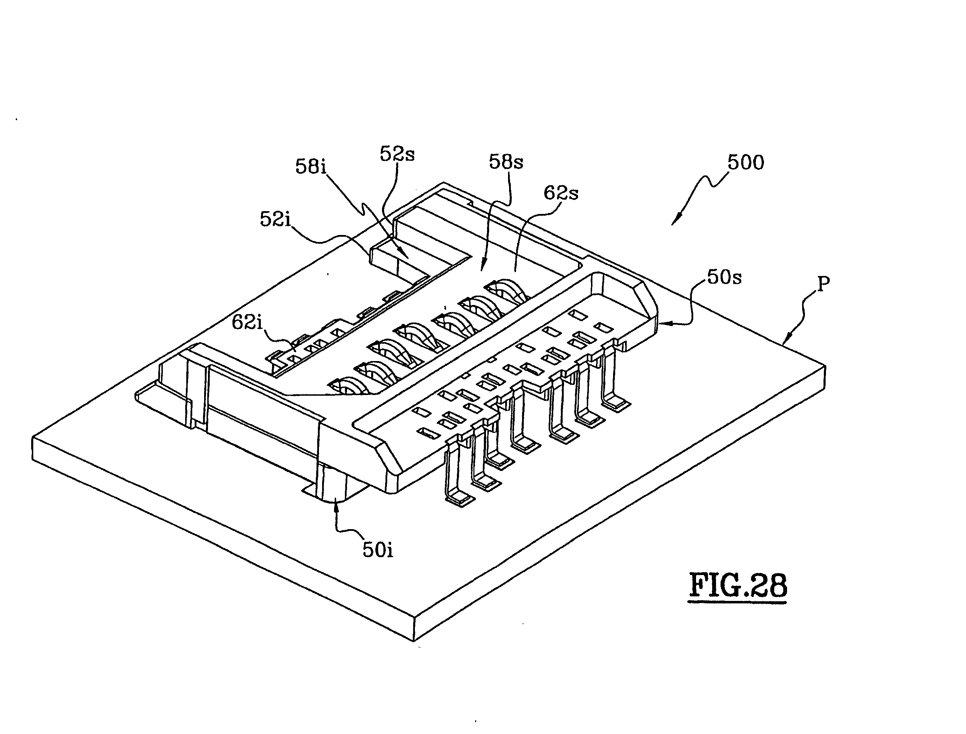

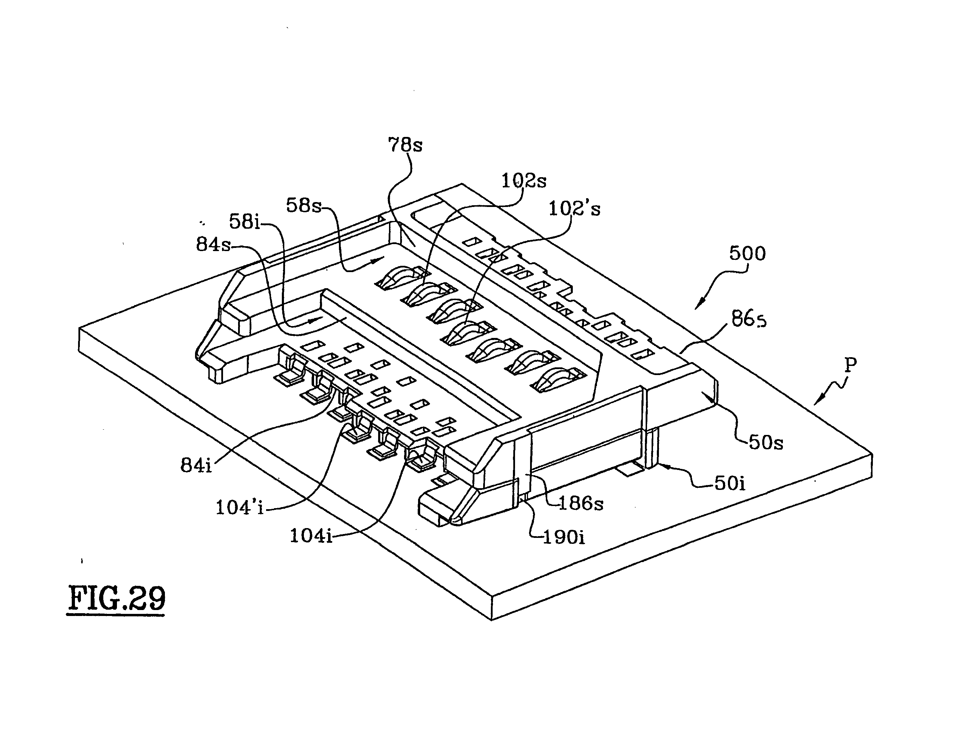

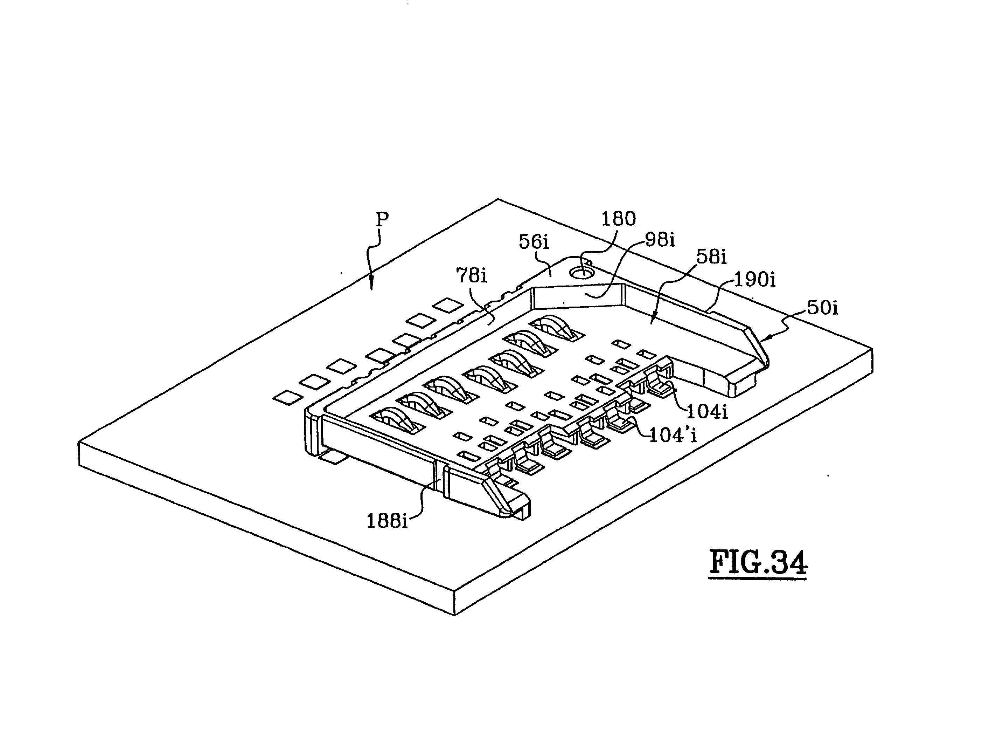

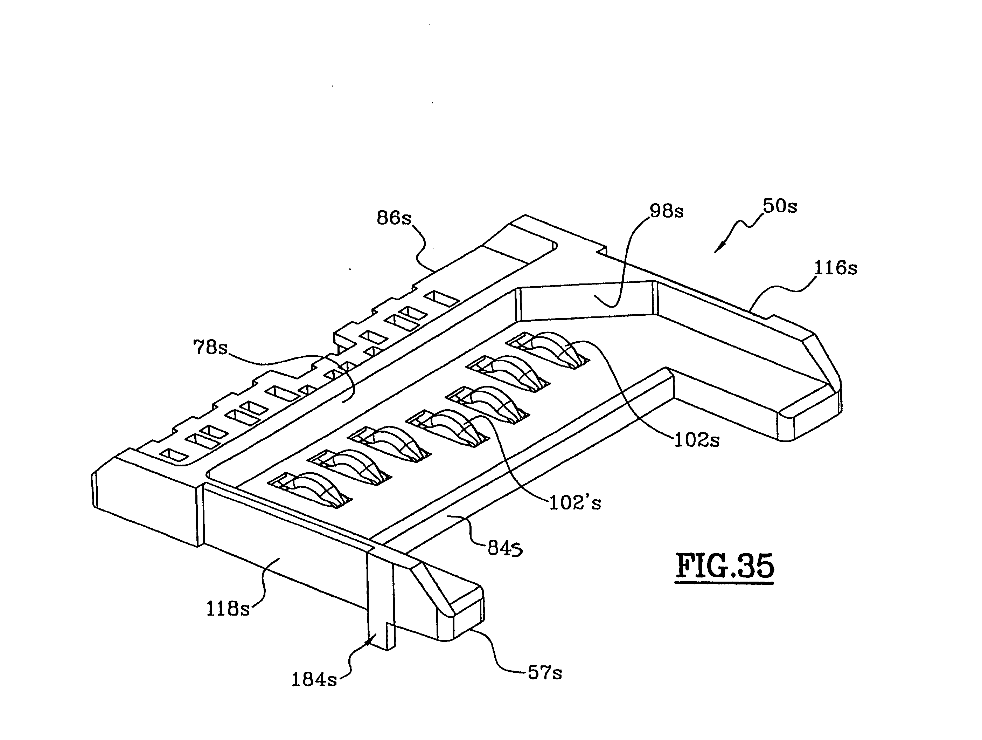

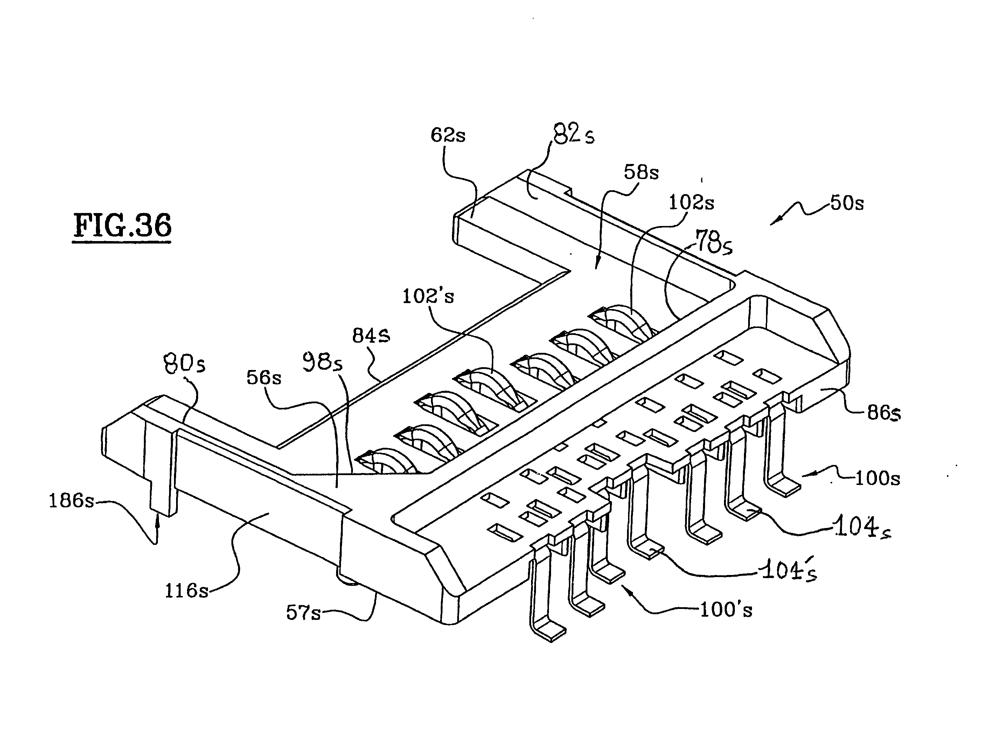

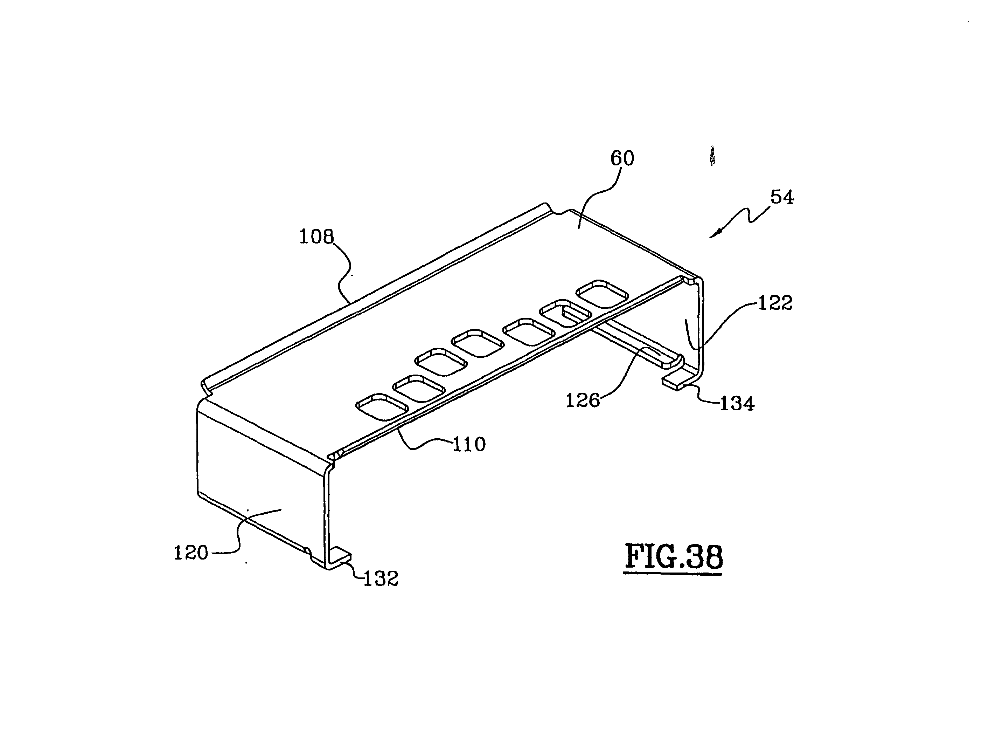

The double connector 500 illustrated in Figures 25 to 40 will now be described, in which figures the same references have been used as previously for the two connectors, namely the lower connector 50i and the upper connector 50s by giving them the suffixes "i" and "s" respectively.

Thus, as may be seen in the figures, the double connector 500 essentially consists of the superposition on a lower connector 50i, which is everywhere identical to the single connector 50 described above, of an upper connector 50s according to the invention whose design is similar but has certain modifications intended to allow its superposition and the electrical connection of the blade-shaped contact elements 100i and 100i'.

As may be seen in Figure 25 and subsequent, the upper connector 50s rests with its plane lower face 57s on the upper face 56i of the lower connector 50i.

In order to allow correct relative positioning of the upper connector 50s on the lower connector 50i, the upper face 56i of the latter has a hole 180i which accommodates a complementary stud 182s which extends vertically from the lower face 57s of-the upper connector 50s. The means for the relative positioning of the two connectors are completed by two lateral tabs 184s and 186s which extend vertically downwards beneath the lower face 57s of the upper connector 50s in order to be accommodated in complementary notches 188i and 190i formed in the lateral faces 118i and 116i of the lower connector 50i. Thus, the position of the upper connector 50s with respect to the lower connector 50i is precisely defined, both longitudinally and transversely.

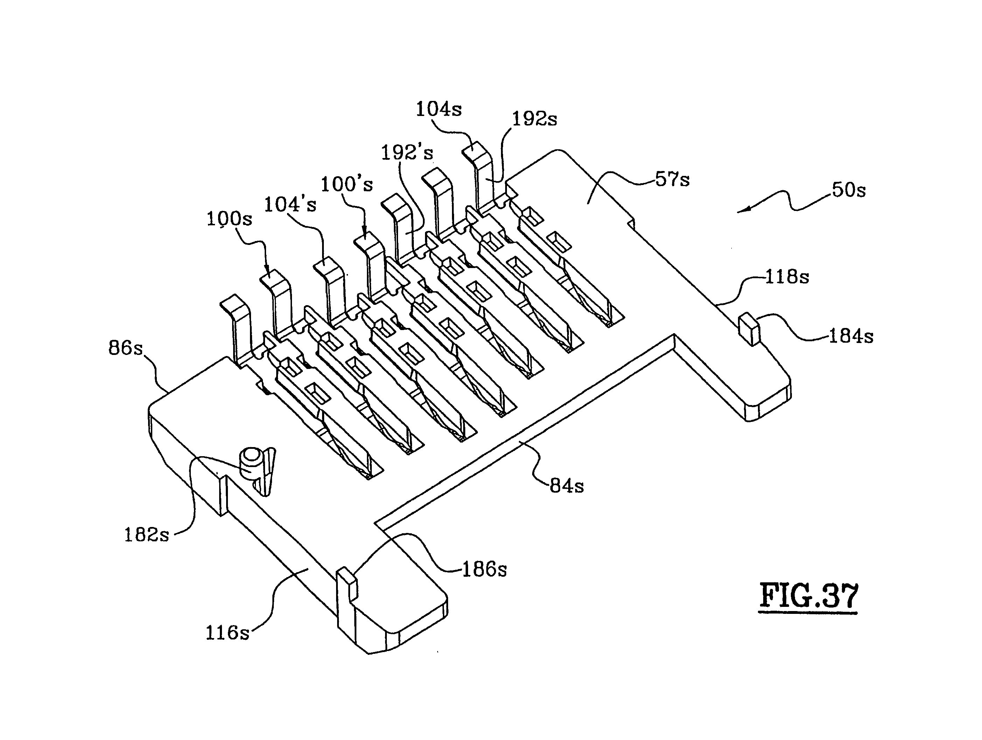

As may be seen in Figure 37, the lower face 57s of the upper connector 50s is plane and smooth in order to form the upper face of the lower housing 58i in which the lower card Ci is accommodated.

In order to fasten the two connectors together so as to form a unitary double connector 500 and subsequently to be fixed to the board P by soldering, the double connector 500 has a single common metal cover 54 whose design is generally identical to that of the cover 54 described above except for its lateral flanges 108 and 110 whose height is greater so as to extend vertically along the superposed lateral walls of the two connectors 50i and 50s.

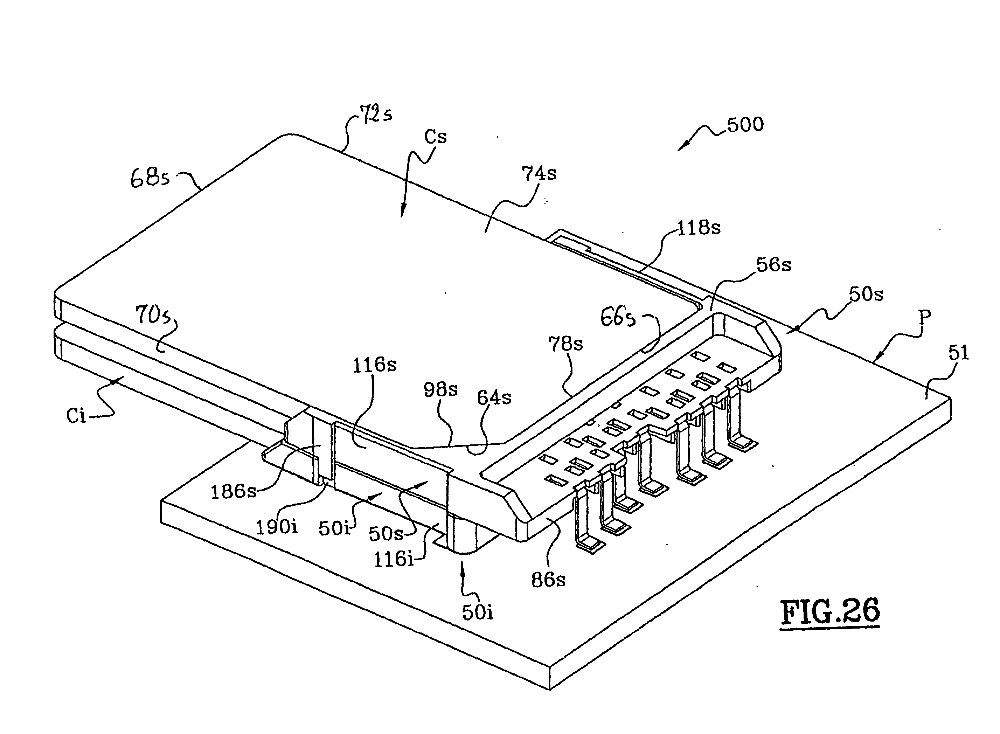

As may be seen in Figure 26, the upper face 74s of the upper card Cs is more or less flush with the plane of the upper face 56s of the upper connector 50s and it is the internal face of the upper plate 60 of the cover 54 which extends above the upper card Cs in order to define the housing 58s in the upward vertical direction.

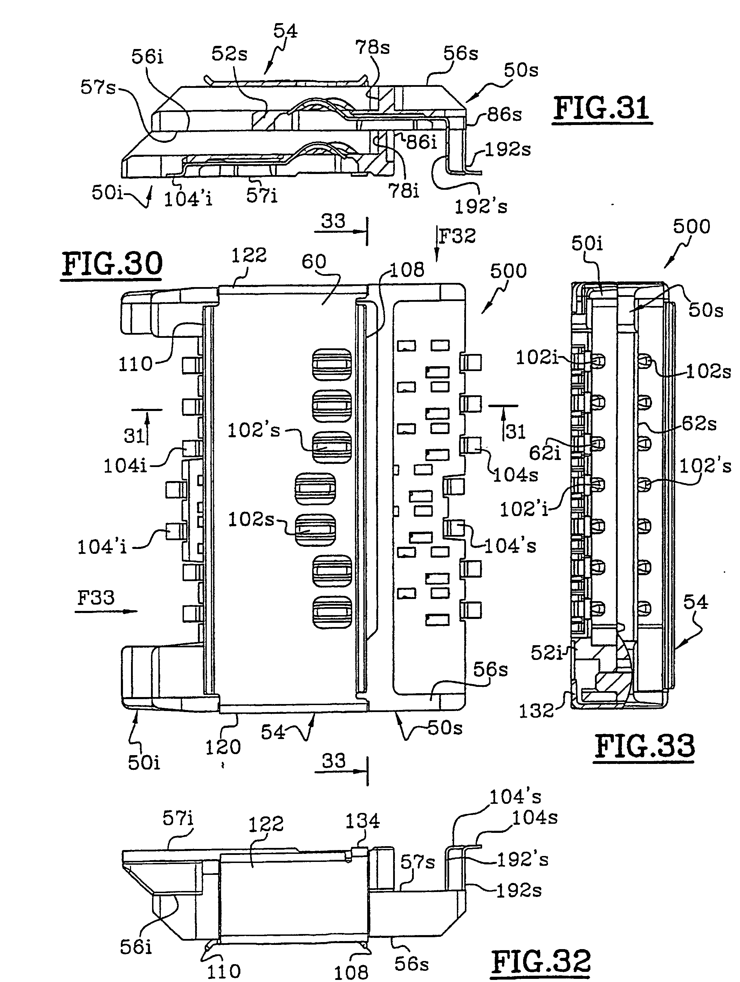

As may be seen in Figure 31, the relative positioning of the two connectors is such that the two cards are aligned longitudinally. For this purpose, the transverse bottom edges 78i and 78s are aligned longitudinally.

In order to allow electrical connection, the contact blades 100s and 100's of the upper connector generally extend longitudinally forwards in the insulating support 52s. From the free contact ends 102s and 102's they extend longitudinally forwards in the direction of the front transverse wall 86s of the insulating support 52s and are then bent through a right angle so as to form tall vertical sections 192s and 192's which extend until they are level with the horizontal plane of the lower face 57i of the lower connector 50i in order for their free connection ends 104s and 104's to lie in the same plane as the connection ends 104i and 104'i of the lower connector 50i.

Because of the similar design of the two connectors of the double connector 500, and as may be seen especially in Figure 33, the free contact ends of the two connectors are aligned vertically.

Referring to Figure 30 and comparing it with Figure 3, it may be seen that the longitudinal dimension of the double connector 500 is only slightly increased compared with a single connector 50 and that the transverse dimension is maintained.

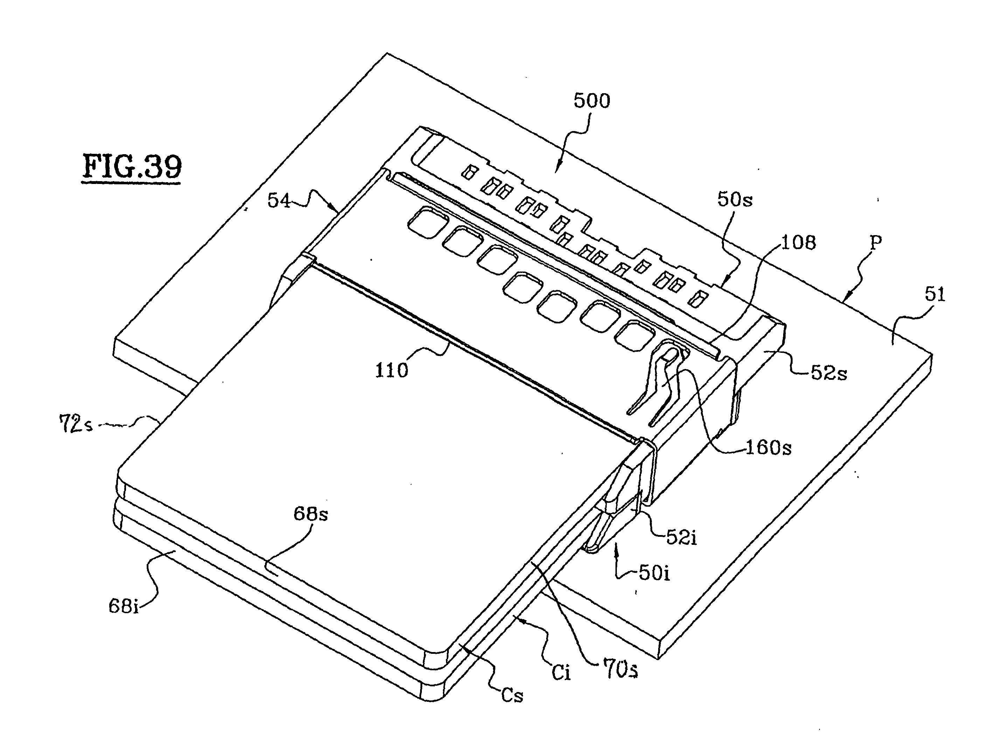

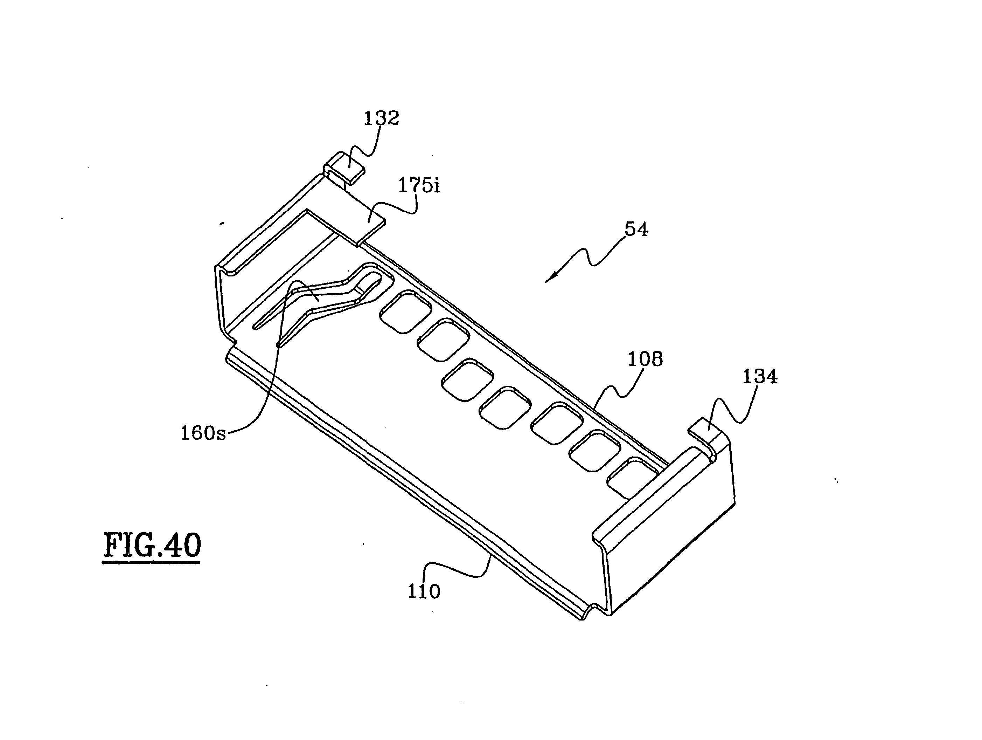

As may be seen in Figures 39 and 40, it is possible to provide two switches for detecting the presence of each of the cards Ci and Cs in the double connector 500.

Advantageously, in order to avoid having to use two independent switches produced in the form of added components, it is proposed to make the lower switch in the form of the normally-open-type switch described with reference to Figures 21 to 24 while the upper switch is made in the form of the normally-closed-type switch described previously with reference to Figures 18 to 20.

The cover 54 is then modified in the manner illustrated in Figures 39 and 40 in order to incorporate, on the one hand, the upper switch blade 160s and the extended tab 175i intended to engage with the lower switch blade (not shown in the figures).

Thus, it will be noted that the two switches have a common point corresponding to the common earth to which the metal cover 54 is connected.

The design of the lower connector is such that it forms a standard component, except of course for the cover 54, in order to produce single connectors or lower connectors for superposed multiple connectors.

As may be seen in Figure 31, it is possible to use tall components under the front part of the upper connector 50s which projects transversely forwards, between the rear transverse wall 86i of the lower connector and the connection leads 104s and 104s', the "wasted" area on the printed-circuit board thus being reduced to the minimum.

If it is desired to make it easier to grip each card, the upper connector may be offset further forwards.

By way of a variant that is not shown, it is of course possible to superpose a third connector, offsetting it slightly forwards with respect to the connector immediately below.

## Claims

1. An electrical system comprising a connector (50s) and a contact-type smart card (Cs) of rectangular general shape, of the type comprising a support (52s) made of insulating material which defines a housing (58s) open in its upper face (56s), this housing being bounded laterally by two parallel longitudinal edges and transversely by at least one front bottom edge (78s) and accommodating a front portion of a card (Cs) which is inserted longitudinally (I) from the front forwards into the housing (58s) in a direction parallel to the general plane of the card and which, on its lower main face (76s) includes conducting pads which are arranged near the front transverse edge (66s) of the card and which engage with the contact ends (102s, 102's) of electrical-contact elements (100s, 100's) arranged in the bottom of the housing of the support (52s) when the card is in its contact position in which its front transverse edge (64s, 66s) butts against the front transverse bottom edge (78s) of the housing, and of the type in which the electrical-contact elements (100s, 100's) are carried by the support, **characterized in that** the electrical-contact elements (100s, 100's) have free connection ends (104s, 104's) which all extend longitudinally beyond the front transverse face (86s) of the support (52s), and **in that** the main portion of the body of the card (Cs) extends rearwards, in a cantilevered fashion, beyond the rear transverse face (84s) of the support (52s).

2. The system according to the preceding claim, **characterized in that** the contact blades (100s, 100's) extend longitudinally forwards in the insulating support (52s), from their free contact ends (102s, 102's) longitudinally forwards in the direction of the front transverse wall (86s) of the insulating support (52s), and are then bent so as to form vertical sections (192s, 192's) in order for their free connection ends (104, 104's) to lie in a same plane.

3. The system according to anyone of the preceding claims, **characterized in that** the length of the front portion of the card (Cs) accommodated in the housing (58s) bounded longitudinally (L1) by the said front transverse bottom edge (78s) and by the said rear transverse face (84s) of the support is less than the transverse width (L2) of the card (Cs).

4. The system according to the preceding claim, **characterized in that** the length of the front portion of the card (Cs) accommodated in the housing (58s) bounded longitudinally (L1) by the said front transverse bottom edge (78s) and by the said rear transverse face (84s) of the support (52s) is equal to approximately one third of the length (L3) of the card (Cs).

5. The system according to any one of the preceding claims, **characterized in that** the insulating support (52s) is extended longitudinally rearwards, beyond the said rear transverse face (84s), by two opposed lateral extensions in which the rear parts of the parallel longitudinal edges, of the housing (58s) are formed for guiding the card (Cs, 70s, 72s) laterally.

6. The system according to any one of the preceding claims, **characterized in that** all the conducting pads on the card (Cs) are aligned transversely, especially along the front end transverse edge (66s) of the card (Cs) and **in that** the contact ends (102s) are aligned transversely apart from at least one (102's) of these ends which is offset longitudinally rearwards so that, when the card (Cs) is inserted longitudinally from the rear to the front into its housing, the corresponding conducting pad on the card comes into contact with this offset contact end (102's) before the other conducting pads on the card each come into contact with one of the transversely aligned contact ends (102s).

7. The system according to any one of the preceding claims, **characterized in that** it includes a metal cover (54) for holding the card (Cs) in the housing which extends above the upper face (74s) of the card and which is bounded longitudinally by two transverse edges, namely a front transverse edge (108s) and a rear transverse edge (110s), located longitudinally approximately in line with the said front transverse bottom edge (78s) of the housing (58s) and in line with the said rear transverse face (84s) of the insulating support (52s), respectively, and **in that** the cover (54) has tabs for fixing it, by soldering, to the upper face (51s) of a board (P) which carries the connector (50s), especially on conducting tracks connected to the earth plane of a printed-circuit board.

8. The system according to the preceding claim, **characterized in that** the cover (54) is made in the form of an upper plate which extends above the upper face (74s) of the card (Cs) and the parallel lateral edges of which are extended by two flanges bent over downwards for mounting the cover (54) on the insulating support (52s).

9. The system according to the preceding claim, **characterized in that** the two mounting flanges form slideways allowing the cover (54) to be mounted on the insulating support by sliding in the longitudinal direction (I).

10. The system according to any one of Claims 5 to 9, **characterized in that** the metal cover (54) includes integrally formed retractable means (146) for providing longitudinal retention of the card (Cs) in its housing (58s), against the elastic return force which is applied to it by a spring (140) for automatically ejecting the card (Cs), which means engage with at least one portion of the rear transverse edge of the card (Cs).

11. The system according to the preceding claim, taken in combination with Claim 5, **characterized in that** one (88) of the said lateral extensions (88s, 90s) extends approximately the entire length of a first lateral edge (70s) of the card (Cs), **in that** the said retention means (146) engage with that part of the rear transverse edge (68) of the card (Cs) which is adjacent to the said first lateral edge (70s) and **in that** the ejection spring (140) engages with a portion of the front transverse edge (66s) of the card adjacent to the second lateral edge (72) of the card.

12. The system according to either of Claims 10 and 11, **characterized in that** the automatic ejection spring (140) is made in the form of a metal blade produced integrally with the metal cover (54).

13. The system according to any one of the preceding claims, **characterized in that** the front transverse edge (66s) of the card has a corner (64s) cut at approximately 45° and intended to engage with a corresponding surface (98s) inclined at 45° formed at one of the ends of the front transverse bottom edge (78s) of the housing (58s) in order to form polarizing means defining a correct position for the card (Cs) in the housing (58s) of the connector (50).

14. The system according to Claim 7 taken in combination with Claim 6, **characterized in that** the upper plate (22) of the cover (54) has as many test holes (61, 61') as there are contact ends (102s, 102's), with test holes (61') offset with respect to the offset ends (102's).

15. The system according to any one of the preceding claims, **characterized in that** it includes a switch (150) for detecting the presence of the card (Cs) in the contact position in the housing (58s).

16. The system according to the preceding claim, **characterized in that** the switch (150) is carried by the insulating support (52s) and includes an actuator (152) for tripping it, with which a portion (64s) of the front transverse edge (66s) of the card (Cs) engages.

17. The system according to the preceding claim taken in combination with Claim 13, **characterized in that** the actuator (152) is placed close to the said inclined surface (98s) and **in that** the said portion of the front transverse edge (66s) of the card consists of the cut corner (64s) of the card.

18. The system according to Claim 15 taken in combination with Claim 8, **characterized in that** the switch is of the type normally closed in the absence of a card and comprises an elastically deformable switch blade (160s) which is integrally produced with the metal cover (54) and which extends vertically and longitudinally from the upper plate (60) of the latter into the housing with its free end (166) which, in the absence of a card, is in elastic bearing contact against a contact end of one of the contact elements of the connector (50s) in order to establish a switching circuit between the free connection end of this contact element and an electrical earth plane to which the metal cover (54) is connected.

19. The system according to Claim 15 taken in combination with Claim 7, **characterized in that** a switch tab (175) of the cover (54) extends horizontally below the lower face (57s) of the insulating support (52s) opposite the free contact end part of a contact element which is extended vertically downwards by a switch blade, especially in the form of a loop, in order to form a normally-open switching circuit which is closed upon insertion of the card (Cs) which causes the contact end to bend elastically downwards in order to bring the loop into contact with a facing portion of the said switch tab of the cover.

## Patentansprüche

1. Elektrisches System mit einem Verbinder (50s) und eine Kontakttyp-Smartkarte (C) im Wesentlichen in rechteckiger Form, wobei der Verbinder einen Träger (52s) aufweist, der aus Isoliermaterial hergestellt ist, und ein an seiner Oberseite (56s) offenes Gehäuse (58s) definiert, wobei dieses Gehäuse seitlich durch zwei parallele Längskanten und quer durch mindestens eine Vorderkante (78s) begrenzt ist und einen vorderen Teil einer Karte (Cs) aufnimmt, die von vorne der Länge (I) nach in das Gehäuse (58s) parallel zur Hauptebene der Karte eingeführt wird und auf ihrer unteren Hauptfläche (76s) leitende Kontaktstellen aufweist, die in der Nähe der vorderen Querkante (66s) der Karte angeordnet sind und in die Kontaktenden (102s, 102's) von elektrischen Kontaktelementen (100s, 100's) eingreifen, die im Boden des Gehäuses des Trägers (52s) angeordnet sind, wenn sich die Karte in ihrer Kontaktposition befindet, in der ihre vordere Querkante (64s, 66s) gegen die untere, querlaufende Vorderkante (78s) des Gehäuses anstößt, und wobei die elektrischen Kontaktelemente (100s, 100's) auf dem Träger lagern, **dadurch gekennzeichnet, dass** die elektrischen Kontaktelemente (100s, 100's) freie Verbindungsenden (104s, 104's) aufweisen, die sich alle in Längsrichtung über die vordere Querfläche (86s) des Trägers (52s) hinaus erstrecken, und dass der Hauptteil des Körpers der Karte (Cs) über die hintere Querfläche hinaus frei tragend nach hinten verläuft.

2. System nach dem vorhergehenden Anspruch, die Kontaktelemente (100s, 100's) sich in Längsrichtung nach vorne in den isolierenden Träger (52s) von ihren freien Kontaktenden (102s, 102's) längs nach vorne in Richtung der vorderen Querwand (86s) des isolierenden Trägers (52s) erstrecken und dann so gebogen sind, dass sie vertikale Abschnitte (192s, 192's) bilden, damit ihre freien Verbindungsenden (104s, 104's) in einer Ebene liegen.

3. System nach einem der vorhergehenden Ansprüche, **dadurch gekennzeichnet, dass** die Länge des vorderen Teils der Karte (Cs), der in dem Gehäuse (58s) aufgenommen wird, das in Längsrichtung (L1) von der querlaufenden Vorderkante (78s) und durch die hintere Querfläche (84s) des Trägers begrenzt ist, kürzer ist als die Querbreite (L2) der Karte (Cs).

4. System nach dem vorhergehenden Anspruch, **dadurch gekennzeichnet, dass** die Länge des vorderen Teils der Karte (Cs), der in dem Gehäuse (58s) aufgenommen wird, das in Längsrichtung (L1) von der querlaufenden Vorderkante (78s) und durch die hintere Querfläche (84s) des Trägers (52s) begrenzt ist, ungefähr 1/3 der Länge (L3) der Karte (C) beträgt.

5. System nach einem der vorhergehenden Ansprüche, **dadurch gekennzeichnet, dass** der isolierende Träger (52s) in Längsrichtung nach hinten über die hintere Querfläche (84s) hinaus durch zwei gegenüberliegende seitliche Verlängerungen verlängert ist, in denen die hinteren Teile der parallelen Längskanten des Gehäuses (58s) zur seitlichen Führung der Karte (Cs,70s, 72s) ausgebildet sind.

6. System nach einem der vorhergehenden Ansprüche, **dadurch gekennzeichnet, dass** sämtliche leitende Kontaktstellen auf der Karte (Cs) quer ausgerichtet sind, insbesondere entlang der vorderen Querkante (66s) der Karte (Cs), und dadurch, dass die Kontaktenden (102s) quer, beabstandet von mindestens einem (102's) dieser Enden, ausgerichtet sind, das in Längsrichtung nach hinten verschoben ist, so dass beim Einführen der Karte (Cs) in Längsrichtung von hinten nach vorne in das Gehäuse (58) die entsprechende leitende Kontaktstelle auf der Karte mit diesem verschobenen Kontaktende (102's) in Kontakt kommt, bevor jeweils die anderen leitenden Kontaktstellen auf der Karte mit dem einen der quer ausgerichteten Kontaktenden (102s) in Kontakt kommen.

7. System nach einem der vorhergehenden Ansprüche, **dadurch gekennzeichnet, dass** es eine Metallabdeckung (54) zum Halten der Karte (Cs) in dem Gehäuse aufweist, die sich oberhalb der oberen Fläche (74s) der Karte ausdehnt und in Längsrichtung von zwei Querkanten, nämlich einer vorderen Querkante (108s) und einer hinteren Querkante (110s) begrenzt ist, die in Längsrichtung ungefähr in Flucht mit der unteren querlaufenden Vorderkante (78s) des Gehäuses (58s) bzw. in Flucht mit der hinteren Querfläche (84s) des isolierenden Trägers (52s) angeordnet ist, und dadurch, dass die Abdeckung (54) Anhängsel aufweist, um sie durch Löten an der oberen Fläche (51s) einer Platte (P) zu befestigen, auf der der Verbinder (50s) aufliegt, insbesondere auf leitenden Schienen, die mit der Masseebene einer gedruckten Schaltung verbunden sind.

8. System nach dem vorhergehenden Anspruch, **dadurch gekennzeichnet, dass** die Abdeckung (54) in Form einer oberen Platte hergestellt ist, die sich oberhalb der oberen Fläche (74s) der Karte (Cs) ausdehnt und deren parallele seitliche Kanten durch zwei Flansche verlängert sind, die zur Befestigung der Abdeckung (54) an dem isolierenden Träger (52s) nach unten umgebogen sind.

9. System nach dem vorhergehenden Anspruch, **dadurch gekennzeichnet, dass** die beiden Befestigungsflansche Gleitwege bilden, durch die sich die Abdeckung (54) durch Gleiten in Längsrichtung (I) auf dem isolierenden Träger befestigen lässt.

10. System nach einem der Ansprüche 4 bis 8, **dadurch gekennzeichnet, dass** die Metallabdeckung (54) integral ausgebildete einziehbare Mittel (146) zur Bereitstellung einer Längsretention der Karte (Cs) in seinem Gehäuse (58s) gegen die elastische Rückzugskraft aufweist, die auf sie von einer Feder (140) zum automatischen Ausstoßen der Karte (Cs) ausgeübt wird, wobei das Mittel mindestens einen Teil der hinteren Querkante der Karte (Cs) greift.

11. System nach dem vorhergehenden Anspruch in Kombination mit Anspruch 5, **dadurch gekennzeichnet, dass** eine (88) der seitlichen Verlängerungen (88s, 90s) sich etwa über die gesamte Länge einer ersten Seitenkante (70s) der Karte (Cs) erstreckt, dadurch, dass die Retentionsmittel (146) den Teil der hinteren Querkante (68) der Karte (Cs) greifen, der der ersten Seitenkante (70s) gegenüberliegt, und dadurch, dass die Ausstoßfeder (140) einen Teil der vorderen Querkante (66s) der Karte greift, der der zweiten seitlichen Kante (72) der Karte gegenüberliegt.

12. System nach einem der Ansprüche 9 und 10, **dadurch gekennzeichnet, dass** die automatische Ausstoßfeder (140) in Form einer mit der Metallabdeckung (54) aus einem Stück hergestellten Metallblatt hergestellt ist.

13. System nach einem der vorhergehenden Ansprüche, **dadurch gekennzeichnet, dass** die vordere Querkante (66s) der Karte eine Ecke (64s) aufweist, die um ungefähr 45° angeschnitten und dazu ausgelegt ist, eine entsprechende, um 45° geneigte Fläche (98s) zu greifen, die an einem der Enden der unteren querlaufenden Vorderkante (78s) des Gehäuses (58s) ausgebildet ist, unter Bildung von Polarisationsmitteln, die eine exakte Position für die Karte (Cs) in dem Gehäuse (58s) des Verbinders (50) definieren.

14. System nach Anspruch 7 in Kombination mit Anspruch 6, **dadurch gekennzeichnet, dass** die obere Platte (22) der Abdeckung (54) so viele Prüflöcher (61, 61') wie vorhandene Kontaktenden (102s, 102's)aufweist, wobei die Prüflöcher (61') bezüglich der verschobenen Enden (102's) verschoben sind.

15. System nach einem der vorhergehenden Ansprüche, **dadurch gekennzeichnet, dass** es einen Schalter (150) zum Nachweis des Vorliegens der Karte (Cs) in der Kontaktposition in dem Gehäuse (58) aufweist.

16. System nach einem der vorhergehenden Ansprüche, **dadurch gekennzeichnet, dass** der Schalter (150) auf dem isolierenden Träger (52s) lagert und einen Aktuator (152) zu seiner Betätigung aufweist, den ein Teil (64s) der vorderen Querkante (66s) der Karte (Cs) greift.

17. System nach dem vorhergehenden Anspruch in Kombination mit Anspruch 13, **dadurch gekennzeichnet, dass** der Aktuator (152) in der Nähe der schrägen Fläche (98s) angeordnet ist und dadurch, dass der Teil der vorderen Querkante (66s) der Karte aus der geschnittenen Ecke (64s) der Karte besteht.

18. System nach Anspruch 15 in Kombination mit Anspruch 8, **dadurch gekennzeichnet, dass** der Schalter von der Art ist, die normalerweise in Abwesenheit einer Karte geschlossen ist und ein elastisch deformierbares Schaltblatt (160s) aufweist, das mit der Metallabdeckung (54) aus einem Stück hergestellt ist und das vertikal und in Längsrichtung von der oberen Platte (60) von letzterer in das Gehäuse (58) mit seinem freien Ende (166) verläuft, das sich in Abwesenheit einer Karte mit einem Kontaktende eines der Kontaktelemente des Verbinders (50s) unter Einrichtung eines Schaltkreises zwischen dem freien Verbindungsende dieses Kontaktelements und einer elektrischen Masseebene, an die die Metallabdeckung (54) angeschlossen ist, in einem elastischen Anpresskontakt befindet.

19. Verbindungsteil nach Anspruch 15 in Kombination mit Anspruch 7, **dadurch gekennzeichnet, dass** ein Schalter-Anhang (175) der Abdeckung (54) horizontal unterhalb der unteren Fläche (57s) des isolierenden Trägers (52s) gegenüber des freien Kontaktendenteils eines Kontaktelements verläuft, der durch ein Schaltblatt vertikal nach unten, insbesondere in Form einer Schlinge, unter Bildung eines normalerweise geöffneten Schaltkreises verlängert ist, der bei Einführung der Karte (Cs) geschlossen wird, was dazu führt, dass sich das Kontaktende elastisch nach unten biegt, um die Schlinge mit einem gegenüberliegenden Teil des Schalter-Anhanges der Abdeckung in Kontakt zu bringen.

## Revendications

1. Système électrique comportant un connecteur (50s) et une carte (Cs) à mémoire à circuit(s) intégré(s) à contact de forme générale rectangulaire, du type comportant un support (52s) en matériau isolant qui délimite un logement (58s) ouvert dans sa face supérieure (56s), délimité latéralement par deux bords longitudinaux parallèles et transversalement par au moins un bord avant de fond (78s) et qui reçoit une portion avant d'une carte (Cs) qui est introduite longitudinalement (I) d'arrière en avant dans le logement (58s) selon une direction parallèle au plan général de la carte et comportant sur sa face principale inférieure (76s) des plages conductrices qui sont agencées au voisinage du bord transversal avant (66s) de la carte et qui coopèrent avec les extrémités de contact (102s, 102's) d'éléments (100s, 100's) de contact électrique agencées dans le fond du logement du support (52s) lorsque la carte est dans sa position de contact dans laquelle son bord transversal avant (64, 66s) est en butée contre le bord transversal avant de fond (78s) du logement, et du type dans lequel les éléments de contact électrique (100s, 100's) sont portés par le support, **caractérisé en ce que** les éléments de contact électrique (100s,100's) comportent des extrémités libres de raccordement (104s, 104's) qui s'étendent longitudinalement toutes au-delà de la face transversale avant (86s) du support (52s), et **en ce que** la portion principale du corps de la carte (Cs) s'étend en porte-à-faux vers l'arrière, au-delà de la face transversale arrière (84s) du support (52s).

2. Système selon la revendication précédente, **caractérisé en ce que** les lames de contact (100s, 100's) s'étendent longitudinalement vers l'avant du support (52s), à partir de leurs extrémités libres de contact (102, 102's) longitudinalement vers l'avant en direction de la paroi transversale avant (86s) du support isolant (52s), et elles sont ensuite repliées afin de constituer des tronçons verticaux (192s, 192's) pour que leurs extrémités libres (104s, 104's) s'étendent dans un même plan.

3. Système selon l'une quelconque des revendications précédentes, **caractérisé en ce que** la longueur de la portion avant de la carte (Cs) reçue dans le logement (58s) délimité longitudinalement (L1) par ledit bord transversal avant de fond (78s) et par ladite face transversale arrière (84s) du support est inférieure à la largeur transversale (L2) de la carte (Cs).

4. Système selon la revendication précédente, **caractérisé en ce que** la longueur de la portion avant de la carte (Cs) reçue dans le logement (58s) délimité longitudinalement (L1) par ledit bord transversal avant de fond (78s) et par ladite face transversale arrière (84s) du support (52s) est égale à environ un tiers de la longueur (L3) de la carte (Cs).

5. Système selon l'une quelconque des revendications précédentes, **caractérisé en ce que** le support isolant (52s) se prolonge longitudinalement vers l'arrière au-delà de ladite face transversale arrière (84s) par deux prolongements latéraux opposés (88s, 90s) dans lesquels sont formées les parties arrière des bords longitudinaux parallèles (80, 82) du logement (58) pour le guidage latéral de la carte (Cs, 70s, 72s).

6. Système selon l'une quelconque des revendications précédentes, **caractérisé en ce que** toutes les plages conductrices de la carte (Cs) sont alignées transversalement, notamment le long du bord transversal d'extrémité avant (66) de la carte (Cs), et **en ce que** les extrémités de contact (102s) sont alignées transversalement à l'exception d'au moins une (102's) de ces extrémités qui est décalée longitudinalement vers l'arrière de manière que, lorsque la carte (Cs) est introduite longitudinalement d'arrière en avant dans son logement (58s), la plage conductrice correspondante de la carte vienne en contact avec cette extrémité de contact décalée (102's) préalablement à la venue en contact des autres plages conductrices de la carte chacune avec l'une des extrémités de contact alignées transversalement (102s).

7. Système selon l'une quelconque des revendications précédentes, **caractérisé en ce qu'**il comporte un capot métallique (54) de maintien de la carte (Cs) dans le logement qui s'étend au-dessus de la face supérieure (74s) de la carte et qui est délimité longitudinalement par deux bords transversaux avant et arrière (108s, 110s) situés longitudinalement sensiblement au droit dudit bord transversal avant de fond (78s) du logement (58s) et au droit de ladite face transversale arrière (84s) du support isolant (52s) respectivement, et **en ce que** le capot (54) comporte des pattes pour sa fixation par soudage sur la face supérieure (51s) d'une plaque (P) qui porte le connecteur (50s), notamment sur des pistes conductrices reliées au plan de masse d'une plaque à circuit imprimé.

8. Système selon la revendication précédente, **caractérisé en ce que** le capot (54) est réalisé sous la forme d'une plaque supérieure qui s'étend au-dessus de la face supérieure (74s) de la carte (Cs) et dont les bords latéraux parallèles se prolongent par deux rebords rabattus vers le bas pour le montage du capot (54) sur le support isolant (52s).

9. Système selon la revendication précédente, **caractérisé en ce que** les deux rebords de montage constituent des glissières permettant le montage du capot (54) sur le support isolant par coulissement selon la direction longitudinale (I).

10. Système selon l'une quelconque des revendications 5 à 9, **caractérisé en ce que** le capot métallique (54) comporte des moyens escamotables (146) réalisés venus de matière pour retenir longitudinalement la carte (Cs) dans son logement (58s), à l'encontre de l'effort élastique de rappel qui lui est appliqué par un ressort (140) d'éjection automatique de la carte (Cs), et qui coopèrent avec au moins une portion du bord transversal arrière de la carte (Cs).

11. Système selon la revendication précédente prise en combinaison avec la revendication 4, **caractérisé en ce que** l'un (88s) desdits prolongements latéraux (88s, 90s) s'étend sensiblement tout le long d'un premier bord latéral (70s) de la carte (Cs), **en ce que** lesdits moyens de retenue (146) coopèrent avec une partie du bord transversal arrière (68) de la carte (Cs) adjacente audit premier bord latéral (70s), et **en ce que** le ressort d'éjection (140) coopère avec une portion du bord transversal avant (66s) de la carte adjacent au second bord latéral (72) de la carte.

12. Système selon l'une quelconque des revendications 10 ou 11, **caractérisé en ce que** le ressort d'éjection automatique (140) est réalisé sous la forme d'une lame métallique réalisée venue de matière avec le capot métallique (54).

13. Système selon l'une quelconque des revendications précédentes, **caractérisé en ce que** le bord transversal avant (66) de la carte comporte un pan (64) coupé sensiblement à 45° destiné à coopérer avec une surface correspondante (98s) inclinée à 45° formée à l'une des extrémités du bord transversal avant de fond (78s) du logement (58s) pour constituer des moyens de détrompage définissant une position correcte de la carte (Cs) dans le logement (58s) du connecteur (50s).

14. Système selon la revendication 7 prise en combinaison avec la revendication 6, **caractérisé en ce que** la plaque supérieure (22) du capot (54) autant de trous (61, 61') de test que d'extrémités de contact (102s, 102's) avec des trous de test (61') décalés en regard des extrémités décalées (102's).

15. Système selon l'une quelconque des revendications précédentes, **caractérisé en ce qu'**il comporte un commutateur (150) de détection de la présence de la carte (Cs) en position de contact dans le logement (58s).

16. Système selon la revendication précédente, **caractérisé en ce que** le commutateur (150) est porté par le support isolant (52s) et comporte un organe (152) de commande de son déclenchement avec lequel coopère une portion (64) du bord transversal avant (66) de la carte (Cs).

17. Système selon la revendication précédente prise en combinaison avec la revendication 13, **caractérisé en ce que** l'organe de commande (152) est disposé à proximité de ladite surface inclinée (98s), et **en ce que** ladite portion du bord transversal avant (66s) de la carte est constituée par le pan coupé (64) de la carte.

18. Système selon la revendication 15 prise en combinaison avec la revendication 8, **caractérisé en ce que** le commutateur est du type normalement fermé en l'absence de carte et comporte une lame de commutateur (160s) déformable élastiquement réalisée venue de matière avec le capot métallique (54) et qui s'étend verticalement et longitudinalement à partir de la plaque supérieure (60) de ce dernier à l'intérieur du logement avec son extrémité libre (166) qui, en l'absence de carte, est en appui élastique de contact contre une extrémité de contact de l'un des éléments de contact du connecteur (50s) pour établir un circuit de commutation entre l'extrémité libre de raccordement de cet élément de contact et un plan de masse électrique auquel est relié le capot métallique (54).

19. Système selon la revendication 15 prise en combinaison avec la revendication 7, **caractérisé en ce qu'**une patte de commutateur (175) du capot (54) se prolonge horizontalement sous la face inférieure (57s) du support isolant (52s) en regard de la partie d'extrémité libre de contact d'un élément de contact qui se prolonge verticalement vers le bas par une lame de commutateur, notamment en forme de boucle, pour constituer un circuit de commutation normalement ouvert qui est fermé lors de l'introduction de la carte (Cs) qui provoque le fléchissement élastique vers le bas de l'extrémité de contact pour amener la boucle en contact avec une portion en vis-à-vis de ladite patte de commutateur du capot.
